# EUROPÄISCHE PATENTSCHRIFT

(11) **EP 4 204 524 B1**
(45) Veröffentlichungstag und Bekanntmachung des Hinweises auf die Patenterteilung: **29.07.2026**
(21) Anmeldenummer: 21766606.4
(22) Anmeldetag: 23.08.2021
(51) Int. Cl.: C11B 1/06, A23J 1/14, C11B 1/10

(54) **VERFAHREN ZUR INDUSTRIELLEN GEWINNUNG VON KALTGEPRESSTEM KERNÖL**
PROCESS FOR INDUSTRIAL EXTRACTION OF COLD-PRESSED KERNEL OIL
PROCÉDÉ D'EXTRACTION INDUSTRIELLE D'HUILE DE NOYAU PRESSÉE À FROID

(30) Priorität: 27.08.2020 DE 102020122456
(43) Veröffentlichungstag der Anmeldung: 05.07.2023
(73) Patentinhaber: Euro-Protein GmbH, 37133 Friedland (DE)
(72) Erfinder: NEUMÜLLER, Waldemar, 37133 Friedland-Ballenhausen (DE)
(74) Vertreter: REHBERG HÜPPE + PARTNER
(86) Internationale Anmeldenummer: PCT/EP2021/073243
(87) Internationale Veröffentlichungsnummer: WO 2022/043248

(56) Entgegenhaltungen:
- EP-A1- 2 783 576
- EP-A1- 3 550 004
- WO-A1-2020/207565
- US-A1- 2012 009 287
- US-A1- 2012 130 099

## Beschreibung

Die Erfindung bezieht sich auf ein Verfahren zur industriellen Gewinnung von kaltgepresstem Kernöl mit den Schritten: Schälen von Körnern einer ölhaltigen Saat und Abtrennen von Schalen von einer schalenarmen Kornfraktion, und Abpressen des kaltgepressten Kernöls von der schalenarmen Kornfraktion, wobei eine Kuchentemperatur in einem entstehenden Presskuchen auf 70 °C begrenzt wird und wobei eine Teilmenge des Presskuchens zurückgeführt, mit der schalenarmen Kornfraktion vor dem Abpressen vermengt und erneut abgepresst wird. Der verbleibende Presskuchen kann mit einem Lösungsmittel extrahiert und zu einem Proteinkonzentrat getrocknet werden.

Bei der ölhaltigen Saat kann es sich insbesondere um Ölsaaten wie Raps, Soja, Sonnenblume, Hanf, Leinsaat und Lupine sowie um andere ölhaltige Saaten einschließlich, aber nicht beschränkt auf, Erdnuss, Mandel, Sesam und Mohn handeln.

Raps (Brassica napus), einschließlich so genannter Null-, Doppelnull- und Plusnull-Rapssorten und Canola, ist nach Sojabohne und gefolgt von Sonnenblume die kommerziell bedeutendste Ölsaat weltweit. Große Mengen pflanzliches Öl werden auch von Baumwolle, Erdnuss und Leinsaat gewonnen. Diese ölhaltigen Saaten stellen mengenmäßig wichtige und wertvolle Rohstoffe für die Nahrungsmittelindustrie, die Futtermittelindustrie, die Biodieselproduktion und die Oleochemie dar. Im Gegensatz zur Sojabohne, die primär als Lieferant von pflanzlichem Eiweiß dient, werden Raps und Sonnenblume derzeit primär zur Ölgewinnung angebaut. In geringeren Mengen finden Hanf, Mohn, Mandel, Kürbis und andere ölhaltige Saaten als Spezialität im Lebensmittelsektor eine wachsende Nachfrage.

### STAND DER TECHNIK

Die Gewinnung von Öl aus ölhaltigen Saaten erfolgt großtechnisch auf mechanischem und/oder chemischem Wege. Bei der mechanischen Gewinnung wird das Öl von den Körnern der ölhaltigen Saaten heiß oder kalt abgepresst.

Nach allgemeiner Ansicht fällt sogenanntes kaltgepresstes Kernöl an, wenn beim Abpressen Temperaturen unter 50 °C eingehalten werden. Der Codex Alimentarius definiert kalt gepresstes Öl jedoch so, dass beim Abpressen keine Wärme zugeführt wird.

Nach den Leitsätzen für Speisefette und Speiseöl, Deutsches Lebensmittelbuch, Bundesministerium für Ernährung und Landwirtschaft BMEL, werden für kaltgepresstes Öl Trans-Fettsäuren von nicht mehr als 0,2 % gefordert. Werte über 0,2 % Trans-Fettsäuren weisen auf Hitzeschäden hin.

Wenn die Körner der ölhaltigen Saaten vor dem Abpressen geschält werden, um einen schalenfreien Presskuchen zu erhalten, liegt der Restölgehalt des Presskuchens, wenn nur kalt abgepresst wird, aufgrund fehlender Friktion durch die Schalen signifikant höher als bei Presskuchen mit Schalen und liegt bei Rapssaat über 15 Gewichtsprozent. Daher wird einer ersten Kalt-pressung häufig eine zweite Pressung bei erhöhter Temperatur nachgeschaltet, um die Ausbeute an Öl zu steigern.

Schalenhaltige Presskuchen werden großtechnisch mit Hexan nachextrahiert, wobei der Restölgehalt bis auf unter 1 Gewichtsprozent reduziert wird und Schrot zurückbleibt, das zum Beispiel bei Raps nur eine begrenzte Wertigkeit für Lebensmittel aufweist.

Presskuchen, die beim Abpressen kaltgepresster Öle in kleineren, dezentralen Ölmühlen zurückbleiben, werden vielfach nicht mit Lösungsmitteln nachextrahiert, da dies aufgrund der notwendigen Investitionskosten und Sicherungsanforderungen für kleinere Ölmühlen unwirtschaftlich wäre.

Um die Öle einer Heißpressung oder der Hexan-Extraktion lebensmittelfähig zu machen, muss ein Raffinationsprozess folgen.

Aus der WO 2010/096943 A2 ist ein Verfahren zur Herstellung eines Proteinpräparats aus Rapssaaten bekannt, das ein Schälen der Körner der Rapssaat, eine mechanische Entölung, in welcher nur eine Teilmenge des Öls abgetrennt wird und welche bei einer über die Zeitdauer des Pressvorgangs gemittelten Temperatur von unter 80 °C durchgeführt wird, und eine Extraktion umfasst. In der Extraktion werden Proteinfremdstoffe aus dem Proteinmehl abgereichert. Der Extraktion ist eine Aufbereitung in der Korngröße nachgeschaltet, um ein Schüttgut mit einer vorgegebenen Korngrößenverteilung zu erhalten. Konkret beginnt das bekannte Verfahren mit einer Schälung der Körner der Rapssaat durch Aufschluss in einer Schlagmühle und Auftrennung in eine kernreiche Grobfraktion und eine schalenreiche Feinfraktion im Luftstrom in einem ZickZack-Sichter. Die Kernfraktion wird dann in einer Schneckenpresse bei Temperaturen zwischen 30 und 45 °C auf einen Restölgehalt von ca. 23 Gewichtsprozent kalt abgepresst, wobei der Presskuchen in Form von zusammengepressten Strängen, Presskuchen-Pellets genannt, erhalten wird. Die Presskuchen-Pellets werden mit Hexan in einer Soxhlet-Apparatur auf einen Restölgehalt unter 3 % entölt. Dann wird das Lösungsmittel im Luftstrom bei Raumtemperatur entfernt. Die so erhaltenen extrahierten Proteinmehl-Pellets werden ohne weitere Zerkleinerung mit einer Ethanol-Lösung im Perkolationsverfahren behandelt. Das dadurch anfallende fertige Proteinkonzentrat wird mit oder ohne nachfolgende Zerkleinerung verwendet.

Die WO 2010/096943 A2 geht davon aus, dass die Rapssaat schon bei ihrer Einlagerung bei Temperaturen von unter 95 °C, bevorzugt unter 40 °C getrocknet wird, wobei es das Ziel ist, eine Enzyminaktivierung und eine begrenzte Proteindenaturierung zu erreichen. Temperaturen unter 40 °C lösen jedoch weder eine Enzyminaktivierung noch eine Proteindenaturierung aus. Anschließend werden die Körner der Rapssaat in einer Mühle in eine Kern- und eine Schalenfraktionen zerlegt, wobei die Schalen durch Platzen und nicht durch gezieltes Brechen aufgehen.

In der mechanischen Entölung, die bei einer über die Zeitdauer des Pressvorgangs gemittelten Temperatur von unter 80 °C durchgeführt wird, wird in dem Rapskernöl eine Grenztemperatur von 40 °C überschritten, die nach herkömmlicher Meinung für gutes kaltgepresstes Rapskernöl einzuhalten ist (http://en.foodlexicon.org/r0000680.php).

Neben seiner direkten Verwendung kann der Presskuchen am Ausgang der Pressschnecke zu Pellets verpresst werden. Weiche ölhaltigen Saaten, wie beispielsweise geschälte Rapssaat lassen sich wegen fehlender Friktion des entstehenden Presskuchens nur langsam und mit geringer Leistung abpressen. Wenn der Ausgang einer Schneckenpresse durch eine Pellet-Matrize teilweise verschlossen ist, werden der innere Druck und der Widerstand in der Schneckenpresse erhöht, so dass die gequetschten weichen ölhaltigen Saaten kaum mehr durch die Pressschnecke der Schneckenpresse transportiert werden können. Dadurch treten Teile der ölhaltigen Saaten mit dem abgepressten Öl durch den Siebmantel der Schneckenpresse aus und verunreinigen das Öl.

Wie die WO 2010/096943 A2 selbst berichtet, werden zudem bereits beim Verpressen des Presskuchens zu Pellets mit einem Restölgehalt unter 17 % Verfärbungen sichtbar, was auf eine erhebliche Proteindenaturierung hinweist. Wenn der Presskuchen gemäß der WO 2010/096943 A2 dennoch einen Restölgehalt von nur mindestens 10 % aufweist, ist von einer ganz erheblichen Proteindenaturierung auszugehen.

Um eine von der WO 2010/096943 A2 geforderte Reinheit der geschälten Kerne von unter 5 % bzw. 1 % zu erreichen, muss beim Windsichten mit erheblichen Kernverlusten gerechnet werden, da leichte Kerne und gewichtsgleiche Schalenhaufen gemeinsam ausgetragen werden. Die mit den Schalen ausgetragenen Kernteile stehen dem Gesamtprozess nicht mehr zu Verfügung stehen und verschlechtern die Rentabilität des bekannten Verfahrens. Eine großtechnische Umsetzung des bekannten Verfahrens ist bislang nicht erfolgt.

Aus der DE 40 35 349 A1 sind ein Verfahren und eine Anordnung zur Gewinnung von Öl aus Leguminosen- und Ölsaaten bekannt, bei der Körner beispielsweise von Rapssaat durch eine Plättchenherstellung aufbereitet werden, auf die ein Anfeuchten dieser Plättchen mit daran anschließender Expandierung bei 105 bis 125 °C mit anschließender Kühlung unter 100 °C und Trocknung sowie ein Abpressen bei Temperaturen < 100 °C auf einen Restölgehalt von 15 bis 25 % folgen. Ein beim Abpressen entstehender Presskuchen wird bei Temperaturen von ca. 65 °C extrahiert.

Dieses bekannte Verfahren geht von ungeschälten Leguminose- und Ölsaaten aus. Diese werden ohne vorheriges Kaltabpressen einer Expander-Behandlung bei Temperaturen von 105-125 °C unterzogen. Erst nach Abkühlen des expandierten Materials auf 65 °C wird das Öl abgepresst. Damit hat der Expander die Funktion eines Zellaufschlusses durch Kochen, um das Abpressen des Öls zu erleichtern.

Nachteilig ist, dass damit die Herstellung von hochwertigem kaltgepresstem Kernöl aus schalenarmer Leguminose- und Ölsaat nicht möglich ist. Außerdem tritt bei den eingesetzten Temperaturen eine Proteindenaturierung auf, was eine weitere Reinigung und Gewinnung von Proteinen erschwert.

Aus der DE 35 29 229 C1 sind ein Verfahren und eine Vorrichtung zur thermischen Konditionierung von Ölsaaten und Ölfrüchten, insbesondere Leguminosesamen, für die Gewinnung von Ölen und Fetten einerseits und einem als Kraftfutter geeigneten öl- bzw. fettfreien Schrot andererseits bekannt. Dabei werden die gereinigten, getrockneten und zerkleinerten Ölsaaten und Ölfrüchte im Anschluss an eine vorausgegangene Glattwalzung kurzzeitig bei überatmosphärischem Druck in einer luft- bzw. sauerstofffreien Atmosphäre auf Temperaturen über 105 bis 148 °C erhitzt und anschließend bei gleichzeitiger Abkühlung auf Temperaturen unterhalb 100 °C schlagartig entspannt. Dadurch wird erreicht, dass die Ureaseaktivität im Schrot weitgehend inhibiert ist und die Proteine insgesamt sowie deren Wasserlöslichkeit in erheblichem Maße erhalten bleiben. Die bekannte thermische Konditionierung kann im Anschluss an eine Pressung und vor einer Extraktion erfolgen, bei der eine Extraktionstemperatur von 50 bis 65 °C eingestellt wird. Für Rapssaat wird konkret vorgeschlagen, die glattgewalzten Körner zunächst unter relativ milden Bedingungen thermisch zu konditionieren, dann das warme Material unter Gewinnung von Rapskernöl abzupressen und den Presskuchen bei gesteigerten Bedingungen erneut thermisch zu konditionieren, abzukühlen sowie schließlich in bekannter Weise zu extrahieren. Hierdurch soll es gelingen, den Ölgehalt der Schalen optimal zu gewinnen und eine klare Trennung von gepresstem Rapskernöl aus den Kernen und extrahiertem Öl aus den Schalen zu erreichen.

Bei diesem bekannten Verfahren werden nur ungeschälte Ölsaaten verwendet. Der Expander ersetzt einen der Extraktion vorgeschalteten Kochvorgang. Hochwertige kalt-gepresste Kernöle werden nicht erhalten. Die hohen Temperaturen führen bei Raps zur Proteindenaturierung.

Die EP 2 783 576 A1 beschreibt ein Verfahren zur Herstellung von Rapsproteinkonzentrat durch Verarbeiten von Körnern einer Rapssaat. Die Körner werden geschält, um eine Rapskernfraktion zu erhalten. Die Rapskernfraktion wird in einer Schneckenpresse teilweise entölt. 5 bis 60 % eines dabei entstehenden proteinhaltigen Presskuchens werden zurückgeführt und mit der Rapskernfraktion vor der Schneckenpresse vermischt, um die Reibung und den Druck in der Schneckenpresse zu erhöhen. Der Rest des proteinhaltigen Presskuchens wird mit einer wässrigen Alkohol-lösung gewaschen, um Zucker, Gerbstoffe, Sinapine und Glukosinolate zumindest teilweise zu entfernen und um ein Rapskuchenproteinkonzentrat mit einem Restölgehalt von 5 bis 25 % (w/w) zu produzieren. Das Rapskuchenproteinkonzentrat wird bei Temperaturen im Bereich von 60 bis 120 °C getrocknet, bis sein Wassergehalt niedriger als 10 % ist. Die Rapskernfraktion kann vorab bis auf 70 °C erwärmt werden.

Der EP 2 783 576 A1 ist nicht zu entnehmen, mit welcher Teilchengröße der zurückgeführte Teil des Presskuchens der Rapskernfraktion zugegeben und in wieweit hierdurch die Leistung der Schneckenpresse erhöht wird.

Der Anteil der Schalen beim Abpressen von Öl von ungeschältem Raps beträgt ca. 15 %. Durch die Schalen wird beim Abpressen in einer Schneckenpresse die Friktion aufgebaut, die erforderlich ist, um einen hohen Druck aufzubauen und damit eine hohe Pressleistung zu erreichen. Da die EP 2 783 576 A1 einen Schalenanteil der Rapskernfraktion mit 1 bis 10 % angibt, ist aus der Menge des zurückgeführten Presskuchens zu folgern, dass die Erhöhung der Friktion durch den zurückgeführten Presskuchen nicht sehr effektiv ist. Das günstigste konkrete Rückführverhältnis ist mit 1 : 0,25 angegeben, wobei der Presskuchen vor der Pressung auf 70 °C erwärmt wird. Dabei kommen auf 1 Tonne Rapskernfraktion 250 kg Presskuchen, was in der abzupressenden Masse dann ca. 20 % Presskuchen zusätzlich zu den 1 bis 10 % Schalen entspricht. Anders gesagt kompensieren 20 % Presskuchen einen Verlust von etwa 5 bis 10 % Schalen, der beim Schälen der Körner eintritt.

Als Nachteil ist zu sehen, dass durch den immer wieder zurückgeführten Presskuchen die erhebliche Gefahr einer Verkeimung der Schneckenpresse besteht. Die Temperatur des Presskuchens bleibt so niedrig, dass keine Pasteurisierung des Presskuchens erfolgt. Eine Verkeimung der Schneckenpresse führt zu einer Toxin-Belastung des Presskuchens und zu einer Verschleppung der Keime und Toxine in alle Produkte des bekannten Verfahrens.

Selbst wenn anschließend mit der Alkohol-Wasser-Extraktion die Verkeimung des Presskuchens aufgehoben wird, bleibt die Gefahr einer Toxinbelastung bestehen. Um die Verkeimung und die Toxinbelastung auszuschließen, ist die Schneckenpresse häufig zu reinigen und zu desinfizieren, was jeweils einen Stillstand der Produktion bedeutet. Dadurch ist die industrielle Anwendbarkeit des bekannten Verfahrens eingeschränkt.

Zusätzlich erfüllt der Proteingehalt des Rapskuchenproteinkonzentrats nicht die von Sojaproteinkonzentrat abgeleitete Definition eines Proteinkonzentrats, die einen Proteingehalt bezogen auf die Trockensubstanz von über 60 % fordert. Aufgrund des geringeren Proteingehalts des Rapskuchenproteinkonzentrats handelt es sich nur um ein Rapsproteinmehl.

In der nachveröffentlichten PCT/EP2019/058957 sind ein Verfahren und eine Vorrichtung zur industriellen Gewinnung von Rapskernöl und Rapsproteinkonzentrat aus Rapssaat beschrieben. Bei diesem Verfahren werden Körner einer Rapssaat geschält. Von einer schalenarmen Kornfraktion mit maximal 4 Gewichtsprozent Schalen und einem Wassergehalt von 4 bis 7 Gewichtsprozent wird kaltgepresstes Rapskernöl abgepresst. In einem entstehenden Presskuchen wird eine Kuchentemperatur auf 70 °C begrenzt und ein erster Restölgehalt auf 18 bis 28 Gewichtsprozent der Trockenmasse reduziert. Gespannter Wasserdampf wird zugeführt, und der Presskuchen wird anschließend zu Collets expandiert. Dabei wird der Wasserdampf so dosiert, dass der Presskuchen vorübergehend auf über 100 °C erwärmt wird und die Collets nach dem Expandieren eine Temperatur von 80 °C bis 95 °C aufweisen. Die Collets werden mit einem organischen Lösungsmittel extrahiert, wobei ein zweiter Restölgehalt auf 2 Gewichtsprozent oder weniger der Trockenmasse reduziert wird. Nach dem Expandieren wird ein Teil der Collets zurückgeführt und vor dem Abpressen mit der schalenarmen Kornfraktion vermengt, um beim erneuten Abpressen die Friktion zu erhöhen.

Die DE 10 2009 022 279 A1 beschreibt die Herstellung von pflanzlichen Proteinkonzentraten aus öligem, pflanzlichem Material, wobei die Zellen zunächst durch Walzen geöffnet werden. Dabei werden Flocken einer Dicke von 0,28 mm-0,32 mm erhalten, die anschließend in einem ersten Extraktor mit einem apolaren Lösungsmittel, im Beispiel Hexan, im Gegenstrom entfettet werden. In einem darauf folgenden zweiten Extraktor wird das Hexan-nasse Material mit wässrigem Ethanol von mindestens 80 Gewichtsprozent weiter extrahiert. Dann folgt in einem dritten Extraktor eine Verdrängung mit azeotropem Ethanol. In einem vierten Extraktor werden weitere Inhaltstoffe wie Zucker mit einem Alkohol von 60-70 Gewichtsprozent herausgelöst. Nach dieser Ethanol-Kaskade wird das Material (Trester) zur Verringerung der Lösungsmittel verpresst. Das Material wird dann über 2 Stunden bei 85 °C getrocknet und kann anschließend vermahlen werden.

Nachteilig an diesem Verfahren ist, dass drei unterschiedliche Miscella-Ströme entstehen, a) der Hexan-Strom b) der Mischstrom Hexan-Ethanol-Wasser und c) der wässrige Ethanol-Strom, was die Rückgewinnung der Lösungsmittel verschlechtert und verteuert. Gegenüber der klassischen Hexan-Extraktion mit Zwischentrocknung gefolgt von einer Extraktion der Zucker mittels wässrigen Alkohols von 60-70 %, wird dieses Verfahren nicht nur aufwändiger und teurer; auch die ganz Steuerung der Rückgewinnung der Lösungsmittel und der verschiedenen Extraktoren wird komplexer, ohne zu einem bessern Konzentrat zu führen.

Zusätzlich werden für die Trocknung der Proteine Kerntemperaturen über 60 °C über längere Zeit (120 min bei 85 °C) eingesetzt. Bekannt ist, dass bei dieser Temperatur eine erhebliche ProteinDenaturierung durch wässrigen Alkohol eintritt.

Aus der EP 3 550 004 A1 ist ein Verfahren zur Verarbeitung von Körnern einer Rapssaat bekannt, bei dem die Körner geschält werden und eine schalenarme Kornfraktion von einer schalenreichen Kornfraktion abgetrennt wird. Die schalenarme Kornfraktion mit einer Feuchtigkeit von 5 bis 9 Gewichtsprozent ihrer Trockenmasse wird zu Flocken gewalzt; und dann wird von der schalenarmen Kornfraktion bei Temperaturen unter 65 °C kaltgepresstes Raps-Kernöl abgepresst, wobei ein Presskuchen erhalten wird. Das kaltgepresste Raps-Kernöl wird in einer ersten Ölfraktion, die während des Abpressens auf nicht mehr als eine Grenztemperatur erwärmt wird, und in einer zweiten Ölfraktion, die während des Abpressens auf mehr als die Grenztemperatur erwärmt wird, aufgefangen. Die Grenztemperatur liegt zwischen 40 und 50 °C. Die schalenarme Kornfraktion wird auf einen ersten Restölgehalt von 18 bis 28 Gewichtsprozent ihrer Trockenmasse abgepresst, wobei der Presskuchen in Form von zusammengepressten Strängen, Presskuchen-Pellets genannt, erhalten wird. Der Presskuchen wird zerkleinert, bevor gespannter Wasserdampf zu dem Presskuchen zugeführt wird. Dabei wird der Presskuchen unter Einwirkung des Wasserdampfs vorübergehend auf über 100 °C erwärmt. Anschließend wird der Presskuchen zu Collets expandiert. Die Collets werden mit Hexan extrahiert, um die Collets auf einen zweiten Restölgehalt von kleiner als 2 Gewichtsprozent ihrer Trockenmasse zu reduzieren.

Die US 2012/009287 A1 offenbart ein Verfahren zur Gewinnung von kaltgepresstem Kernöl bei unterschiedlichen Temperaturen unter 70°C, bei welchem Sonnenblumenkerne geschält und abgepresst werden und der Presskuchen in Form von Pellets anfällt.

### AUFGABE DER ERFINDUNG

Der Erfindung liegt die Aufgabe zugrunde, ein universelles, stabiles, reproduzierbares und durchlaufendes Verfahren aufzuzeigen, mit dem aus einer ölhaltigen Saat kostengünstig hochwertiges kaltgepresstes Kernöl in hoher Ausbeute und ein wenig denaturiertes Protein, insbesondere als Proteinkonzentrat, erhalten wird, wobei eine großtechnische Umsetzbarkeit des Verfahrens sichergestellt ist.

### LÖSUNG

Die Aufgabe der Erfindung wird durch ein Verfahren mit den Merkmalen des unabhängigen Patentanspruchs 1 und durch ein Verfahren mit den Merkmalen des unabhängigen Patentanspruchs 7 gelöst. Bevorzugte Ausführungsformen der erfindungsgemäßen Verfahren sind in den abhängigen Patentansprüchen definiert.

### BESCHREIBUNG DER ERFINDUNG

Bei dem erfindungsgemäßen Verfahren zur industriellen Gewinnung von kaltgepresstem Kernöl mit den Schritten Schälen von Körnern einer ölhaltigen Saat und Abtrennen von Schalen von einer schalenarmen Kornfraktion, und Abpressen des kaltgepressten Kernöls von der schalenarmen Kornfraktion, wobei eine Kuchentemperatur in einem entstehenden Presskuchen auf 70 °C begrenzt wird und wobei eine Teilmenge des Presskuchens zurückgeführt, mit der schalenarmen Kornfraktion vor dem Abpressen vermengt und erneut abgepresst wird, wird die Teilmenge des Presskuchens vor dem Zurückführen zu beim erneuten Abpressen formstabilen Pellets verpresst, wobei die Teilmenge des Presskuchens vor dem Zurückführen vorübergehend auf über 100 °C erwärmt und vor dem erneuten Abpressen wieder auf eine Temperatur unter 60 °C abgekühlt wird. Alternativ wird die zurückgeführte Teilmenge des Presskuchens nicht zu Pellets verpresst, sondern nach Zuführen von gespanntem Wasserdampf zu Collets expandiert, wobei die zurückgeführte Teilmenge des Presskuchens aber ebenfalls vor dem Zurückführen vorübergehend auf über 100 °C erwärmt und vor dem erneuten Abpressen wieder auf eine Temperatur unter 60 °C abgekühlt wird. Ausschließlich bei dieser Alternative mit dem Zuführen von gespanntem Wasserdampf und dem Expandieren zu Collets gilt dann, wenn die ölhaltige Saat Rapssaat ist, aber auch nur dann zwingend, dass die schalenarme Kornfraktion mehr als 4 Gewichtsprozent Schalen und/oder einen Wassergehalt von weniger als 4 Gewichtsprozent oder von mehr als 7 Gewichtsprozent aufweist und/oder ein Restölgehalt des Presskuchens auf weniger als 18 Gewichtsprozent einer Trockenmasse des Presskuchens reduziert wird. Bei der Alternative mit dem Zuführen von gespanntem Wasserdampf und dem Expandieren zu Collets kann die ölhaltige Saat also insbesondere dann auch Rapssaat sein, wenn der Restölgehalt des Presskuchens auf unter 18 Gewichtsprozent oder vorzugsweise unter 16 Gewichtsprozent der Trockenmasse des Presskuchens reduziert wird. Unabhängig von dem Restölgehalt des Presskuchens sowie dem Schalenanteil und dem Wassergehalt der schalenarmen Kornfraktion kann die ölhaltige Saat bei der Alternative mit dem Zuführen von gespanntem Wasserdampf und dem Expandieren zu Collets jede andere ölhaltige Saat als Rapssaat und insbesondere Soja, Hanf, Sonnenblume, Leinsamen, Baumwolle, Erdnuss, Mohn, Mandel und Kürbis sein.

Bei dem erfindungsgemäßen Verfahren werden die Körner der ölhaltigen Saat vor dem Abpressen des kaltgepressten Kernöls geschält. Entsprechend weist der durch das Abpressen erhaltene Presskuchen nur wenige Schalen auf. Hieraus resultiert neben einer gewissen Qualitätssteigerung bei dem kaltgepressten Kernöl insbesondere eine erhebliche Steigerung der Wertigkeit des Presskuchens. Umgekehrt gestaltet sich das Abpressen der schalenarmen Kornfraktion auf einen niedrigen Restölgehalt beim Einhalten der maximalen Kuchentemperatur in dem entstehenden Presskuchen von 70 °C als schwierig.

Herkömmliche Schneckenpressen zum Abpressen von Öl sind auf Leistung ausgelegt, d.h. es soll ein möglichst hoher Durchsatz mit hoher Entölung erreicht werden. Durch das Schälen der Körner und das entsprechende Fehlen von Schalen in der Schneckenpresse tritt eine Leistungsabnahme ein, welche den Durchsatz einer schalenarmen Ölkaltabpressung gegenüber einer normalen Ölkaltabpressung reduziert und zusätzliche Kosten verursacht, da eine größere Schneckenpresse mit höherer Leistungsaufnahme erforderlich ist. Zudem kommt es durch die höher Leistungsaufnahme auch zu einer stärkeren und schnelleren Erwärmung des Materials in der Schneckenpresse.

Um die Leistung der schalenarmen Ölkaltabpressung mit einer Schneckenpresse zu erhöhen und damit die Wirtschaftlichkeit zu verbessern, wird bei dem erfindungsgemäßen Verfahren eine Teilmenge des Presskuchens der schalenarmen Kornfraktion vor dem Abpressen zugesetzt, um die Friktion beim Abpressen zu erhöhen. Diese Rückführung ist bei dem erfindungsgemäßen Verfahren nicht mit der Gefahr einer Verkeimung der Schneckenpresse verbunden, da die zurückgeführte Teilmenge des Presskuchens aufgrund ihrer thermischen Behandlung frei von Verkeimungen und daher hygienisch unbedenklich ist. Bei dem erfindungsgemäßen Verfahren wird der schalenarmen Kornfraktion vor dem Abpressen kein Presskuchen zugesetzt, sondern aus der zurückgeführten Teilmenge des Presskuchens werden vor dem Zusetzen Pellets oder Collets mit gegenüber dem Presskuchen veränderten mechanischen Eigenschaften ausgebildet. Durch die Zugabe der Pellets oder Collets zur Friktionserhöhung bei der Kaltpressung werden zumindest Leistungsdaten einer herkömmlichen Ölkaltabpressung von ungeschälter Ölsaat erreicht, weil die mechanischen Eigenschaften sowohl der Pellets als auch der Collets für die Leistungssteigerung beim Abpressen günstiger als diejenigen des direkt durch das Abpressen erhaltenen Presskuchens sind.

Indem bei dem erfindungsgemäßen Verfahren durch das Zurückführen der Collets oder Pellets die Friktion der schalenarmen Kornfraktion beim Abpressen erhöht wird, wird das Begrenzen der Kuchentemperatur in dem entstehenden Presskuchen auf 70 °C trotz des Abpressens eines großen Anteils des in der jeweiligen ölhaltigen Ölsaat enthaltenen Öls zumindest erheblich erleichtert. Das Zurückführen der Collets oder Pellets kann auch notwendig sein, um trotz des Abpressens eines wesentlichen Anteils des in der jeweiligen ölhaltigen Saat enthaltenen Öls, so dass zum Beispiel ein Restölgehalt des Presskuchens von unter 18 Gewichtsprozent oder unter 16 Gewichtsprozent erreicht wird, die Kuchentemperatur in dem entstehenden Presskuchen überhaupt auf 70 °C begrenzen zu können.

Überraschenderweise zeigt sich, dass die zurückgeführte Teilmenge des Presskuchens sowohl dann, wenn sie in Collets vergleichsweise geringer Dichte expandiert wird, als auch dann, wenn sie zu formstabilen Pellets hoher Dichte verpresst wird, beim Abpressen von kaltgepresstem Kernöl von geschälten ölhaltigen Saaten die Funktion von Schalen übernehmen kann. Besonders günstig wirken sich die Collets oder Pellets bei einer auf die jeweilige ölhaltige Saat abgestimmten mittleren Größe aus. Unterschiedliche ölhaltige Saaten weisen eine unterschiedliche mittlere Korngröße auf, weshalb günstige Mindest- und Maximalgrößen der Collets oder Pellets von der jeweiligen ölhaltigen Saat abhängig sind. Eine günstige mittlere Größe der Collets oder Pellets steht dabei in einem etwa gleichbleibenden Verhältnis zu einer mittleren Teilchengröße der schalenarmen Kornfraktion beim Kaltabpressen und/oder einer mittleren Korngröße der Körner der ölhaltigen Saat.

Im Folgenden wird auf massegewichtete mittlere Größen Bezug genommen, die sich bei einer Mittelwertbildung unter Wichtung der einzelnen Teilchen- oder Korngrößen mit der Masse des jeweiligen Teilchens oder Korn ergeben, um zu verhindern, dass Feinteilchen, deren Anteil an der jeweiligen Gesamtmasse trotz ihrer großen absoluten Anzahl nur klein ist, die jeweilige mittlere Größe übermäßig beeinflussen.

Die massegewichtete mittlere Größe der Collets ist vorzugsweise mindestens so groß wie die mittlere Teilchengröße der schalenarmen Kornfraktion. Bei Pellets ist die mittlere Größe vorzugsweise mindestens halb so groß wie die mittlere Teilchengröße der schalenarmen Kornfraktion. Eine Obergrenze für die mittlere Größe der Collets liegt bei mittleren Teilchengrößen der schalenarmen Kornfraktion bis 5 mm bei 400 % und darüber bei 300 % der Teilchengröße. Bei Pellets liegt die Obergrenze für die mittlere Größe bei mittleren Teilchengrößen der schalenarmen Kornfraktion bis 5 mm bei 300 % und darüber bei 200 % der Teilchengröße. Je nach Geometrie der Pellets oder Collets ist auch eine gewisse Unterschreitung oder Überschreitung der Mindestgröße und der Obergrenze möglich. Die genannten Obergrenzen sollten aber nicht wesentlich überschritten werden, da es ansonsten zu Brückenbildungen zwischen den Collets oder Pellets kommt und in der Folge relevante Anteile der schalenarmen Kornfraktion zu wenig komprimiert werden. Das Ergebnis wäre ein erhöhter Restölgehalt im Presskuchen.

Die gewünschte mittlere Größe der Collets oder Pellets kann durch kontrolliertes Zerkleinern und optional nachfolgendes Sieben des zerkleinerten Guts erreicht werden. Konkret können die zunächst erzeugten Collets oder Pellets mittels Brechwalzen definiert gebrochen werden.

Collets eigen sich als Presshilfe für geschälte ölhaltige Saaten noch besser als Pellets, da Pellets bereits komprimiert sind und damit nur eine leichte Drainagewirkung für das Öl haben. Collets hingegen weisen Hohlräumen auf die unter Kompression zu einem hohen Anteil erhalten bleiben. Das erhöht die Drainage des Kernöls bei der Ölpressung. Gleichzeitig führen die Collets ähnlich wie Schalen zu Fehlstellen in dem verdichteten Presskuchen, was die Öldrainage *zusätzlich erleichtert.* Diese Fehlstellen sind bei dem in dem erfindungsgemäßen Verfahren anfallenden Presskuchen noch zu erkennen. Collets bei Temperaturen um 25 °C sind fest und hart. Dabei schwankt die Härte je nach Restölgehalt. Als günstig hat sich ein Restölgehalt von 12-25 % bezogen auf die Trockenmasse gezeigt.

Die Ölleistung der Kalt-Pressung einer geschälten ölhaltigen Saat steigt mit Presshilfe erheblich an und erreicht mindestens das Niveau einer Ölkaltabpressung mit Schalen. Die Öldrainage und damit die Abtropfgeschwindigkeit des Öls am Seiher verändert sich mit der Menge an gebrochenen Collets und strebt einem Maximalwert zu. Ist dieser Maximalwert, erreicht ändert sich die Ölleistung der Presse nicht mehr. Dieser Maximalwert kann bis zu 30 % über der Leistung einer Ölkaltabpressung mit Schalen liegen, da bei höherem Druck erst später die Menge an Trub entsteht, wie man es von der Ölkaltabpressung mit Schalen kennt.

Zur Herstellung der Collets wird der Presskuchen in einem Expander-Extruder unter Druck und mit dem Wasserdampf so bearbeitet, dass in den Collets weiterhin eine Proteinlöslichkeit von mindestens 10 %, idealerweise zwischen 60 und 100 % der ursprünglichen Proteinlöslichkeit, vorliegt. Dabei treten kurzeitig Temperaturen bis zu 140 °C bei einem Druck von 20-40 bar auf. Wichtig ist, dass diese Collets im Expander ausreichend hygienisiert wurden, bevor die abgekühlten Collets auf der Brechwalze gebrochen werden. Idealerweise wird die Gesamtkeimzahl der Collets bestimmt. Ausreichend ist die Hygienisierung, wenn Salmonellen nicht mehr nachweisbar sind.

Idealerweise bleibt die Proteinlöslichkeit der Originalsubstanz (ölhaltigen Saaten) erhalten, doch können auch noch Collets, die nicht zum Abpressen zurückgeführt werden, verwendet werden, in denen die Proteinlöslichkeit mindestens 10 % der originalen ölhaltigen Saaten, gemessen als NSI-Wert (Nitrogen Solubility Index), beträgt.

Konkret kann die in Form von Collets zurückgeführte Teilmenge des Presskuchens eine maximale Teilchengröße von 4 bis 6 mm, vorzugsweise von 5 mm aufweisen. Es kann sich also insbesondere um Feinteile und Bruchstücke von Collets handeln, zu denen der gesamte Presskuchen nach dem Zuführen des gespannten Wasserdampfs expandiert wird und die überwiegend anderweitig, insbesondere durch Extrahieren weiterverarbeitet werden. Feinteilchen kleiner 1 mm können dem Presskuchen schon vor der Herstellung der Collets oder Pellets wieder zugesetzt werden. Je nach Schalenanteil der jeweiligen Saat ersetzt die zurückgeführte Teilmenge des Presskuchens die zuvor abgetrennten Schalen, weshalb die zurückgeführte Teilmenge bis zu 30 % des Presskuchens und damit auch der zu pressenden Masse ausmachen kann. Je nach Pressentyp liegt die sinnvollerweise zurückgeführte Teilmenge über 5 % und häufig zwischen 10 % und 15 % des Presskuchens.

Nicht nur die Collets, die unmittelbar durch das Expandieren aus dem Presskuchen entstehen, eignen sich für die Rückführung und Erhöhung der Friktion beim Abpressen der schalenarmen Kornfraktion. Auch die Collets, die nach einer Extraktion mit einem organischen Lösungsmittel zum Reduzieren ihres Restölgehalts zurückbleiben, sind geeignet und können mit einer Maximalgröße von 5 mm abgesiebt, getrocknet und zum Abpressen zurückgeführt werden.

Überraschenderweise zeigt sich, dass die Collets oder Pellets die Friktion erhöhen und so die Leistung des Abpressens des kalten Öls verbessern, ohne die Qualität des abgepressten Öls zu verringern. Vielmehr steigen der Durchsatz und die Pressleistung bei gleichbleibender Stromaufnahme und damit wird auch die Kuchentemperatur begrenzt.

Als günstig erweist es sich, wenn die zurückgeführte Teilmenge des Presskuchens bis auf eine Temperatur von unter 50 °C oder auf eine Temperatur von 20 bis 35 °C und vorzugsweise auf eine Temperatur von 25 bis 30 °C, d. h. etwa auf Umgebungstemperatur abgekühlt wird, so dass die Pellets oder Collets fest und wenig verformbar sind, bevor sie der schalenarmen Kornfraktion zugeschlagen werden.

Konkret können die Körner der jeweiligen ölhaltigen Saat geschält werden, indem sie durch einen Walzenspalt zwischen Schälwalzen hindurchgeführt werden. Alternative Schälverfahren die zu einem ähnlichen Ergebnis führen (z. B. Prallschälung) sind ebenfalls einsetzbar. Dann können Schalen von der schalenarmen Kornfraktion durch Sieben und/oder Windsichten soweit abgetrennt werden, so dass die in der schalenarmen Kornfraktion verbleibenden Schalen nicht mehr als 4 Gewichtsprozent der schalenarmen Kornfraktion ausmachen. Von der schalenarmen Kornfraktion wird das kaltgepresste Kernöl abgepresst, wobei ein Wassergehalt der schalenarmen Kornfraktion von 4 bis 7 Gewichtsprozent betragen kann, wobei eine Kuchentemperatur in einem entstehenden Presskuchen auf 70 °C begrenzt wird und wobei ein Restölgehalt auf 8 bis 28 Gewichtsprozent und vorzugsweise auf 8 bis 16 Gewichtsprozent einer Trockenmasse des Presskuchens reduziert werden kann.

Zu dem gesamten Presskuchen kann der gespannte Wasserdampf zugeführt werden, und der gesamte Presskuchen anschließend zu Collets expandiert werden, wobei der Wasserdampf so dosiert werden kann, dass der Presskuchen unter Einwirkung des Wasserdampfs vorübergehend auf über 100 °C erwärmt wird und die Collets nach dem Expandieren eine Temperatur von 80 °C bis 95 °C aufweisen. Diese Temperatur ist durch Kühlung weiter auf unter 60°C zu reduzieren.

Nach dem Expandieren wird dann ein Teil der Collets zurückgeführt, mit der schalenarmen Kornfraktion vor dem Abpressen vermengt und erneut abgepresst.

Diese Collets wären bereits als solche als Tierfutter oder nach Vermahlung als Lebensmittel verwendbar. Sie sind durch das Erwärmen des Presskuchens hygienisch unbedenklich und weisen dennoch durch die kurze Zeit dieses Erwärmens eine günstige Aminosäurezusammensetzung mit allenfalls geringen unerwünschten Proteindenaturierungen auf.

Insbesondere weisen die Collets eine für ihre weitere Aufbereitung, wie sie im Folgenden erläutert werden wird, günstige zusammenhängende, aber offene Struktur auf, die über ihre Aufbereitung hinweg erhalten werden kann.

Das erfindungsgemäße Verfahren kann, falls erforderlich, mit einer Reinigung der Körner der ölhaltigen Saat beginnen, um Verunreinigungen wie Steine oder Spreu zu entfernen. Die so gereinigten Körner können einer Klassierung nach Korngrößen unterworfen werden, um Körner abzutrennen, die für das anschließende Schälen der Körner nicht gut geeignet sind. Konkret können bei Rapssaat Körner kleiner als eine Mindestgröße zwischen 1,2 mm und 1,8 mm, vorzugsweise von etwa 1,4 mm, und größer als eine Maximalgröße zwischen 2,6 und 3,0 mm, vorzugsweise von etwa 2,8 mm, abgetrennt werden. Dabei können die die Maximalgröße überschreitenden Körner mit einer auf ihre Korngröße abgestimmten Vorrichtung getrennt geschält, und die Körner mit einer Korngröße unterhalb der Mindestgröße anderweitig verwendet werden. Typischerweise liegt der Anteil kleiner Körner unter 8 Gewichtsprozent, oftmals unter 4 Gewichtsprozent.

Bereits zuvor oder anschließend können die Körner für das Schälen auf einen Feuchtigkeitsgehalt zwischen 4 und 7 Gewichtsprozent, vorzugsweise von etwa 5 Gewichtsprozent, eingestellt und dazu bedarfsweise getrocknet werden. Die Trocknungstemperatur sollte ggf. so gewählt werden, dass eine Korntemperatur von 70 °C, vorzugsweise von 65 °C, nicht überschritten wird, um eine Proteindenaturierung beim Trocknen zu vermeiden. Zum Brechen der Schalen werden die Körner durch einen Walzenspalt zwischen Schälwalzen hindurchgeführt, der typischerweise mindestens 20 % kleiner als die Mindestgröße der Körner ist. Die Körner können auch nacheinander mehrere Walzenspalte mit abnehmenden Größen durchlaufen.

Anschließend werden die zwischen den Schälwalzen oder durch andere Schalen brechende Schälverfahren (z. B. Prallschälung) gebrochenen Körner insbesondere durch Sieben und/oder Windsichten, wozu auch eine Aspiration der Schalen zählt, in die schalenarme Kornfraktion und eine schalenreiche Kornfraktion getrennt. Die dabei in der schalenarmen Kornfraktion verbleibenden Schalen machen möglichst nicht mehr als 4 Gewichtsprozent aus. Vorzugsweise betragen sie nicht mehr als 3,5 Gewichtsprozent.

Beim Windsichten kann eine Ausbeute der schalenarmen Kornfraktion von typischer Weise mehr als 75 % und vorzugsweise etwa 80 % erreicht werden. Die schalenreiche Kornfraktion ist komplementär zu der schalenarme Kornfraktion, so dass die Ausbeute an schalenreicher Kornfraktion zwischen 20 % und 25 % der Masse der eingesetzten ölhaltigen Saaten beträgt.

In der schalenreichen Kornfraktion finden sich noch Kerne oder Kernfragmente, die bis zu 40 Gewichtsprozent der schalenreichen Kornfraktion ausmachen können. Daher wird die schalenreiche Kornfraktion sinnvoller Weise weiter aufbereitet. Dies kann durch bekannte Verfahren wie Abpressen von Öl bei Temperaturen über 90 °C oder Lösungsmittelextraktion der schalenreichen Kornfraktion insbesondere mit Hexan oder absoluten Alkoholen erfolgen. Alternativ kann die schalenreiche Kornfraktion mit Wasser von etwa 20 bis 30 °C, d. h. Raumtemperatur oder ca. 25 °C, versetzt werden, das eine Quellung der in den Kernen oder Kernfragmenten enthaltenen Fasern und damit eine Flotation der Kerne oder Kernfragmente auslöst, um eine weitere schalenarme Kornfraktion zu gewinnen.

Aufgrund einer anderen Morphologie tritt die Quellung bei den in den Schalen enthaltenen Fasern nicht oder zumindest nicht in demselben Maße auf. Zudem unterscheiden sich die Kerne oder Kernfragmente von den Schalen durch einen höheren Ölgehalt. Nach der Quellung der Fasern in den Kernen, weisen die Kerne eine geringere Dichte als Wasser auf, während die Schalen weiterhin eine höhere Dichte als Wasser haben. Entsprechend tritt eine Flotation der Kerne auf, wobei die Flotation und die damit einhergehende Trennung von Kernen und Schalen durch Einleitung feiner Gasblasen und/oder leichtes, scherungsarmes Rühren unterstützt werden kann. Die flotierten Kerne werden als die weitere schalenarme Kornfraktion abgenommen. Sie können über eine Bandpresse entwässert und der schon zuvor abgetrennten schalenarmen Kornfraktion zugeschlagen werden. Dieses Zuschlagen kann bereits vor dem Abpressen des kaltgepressten Kernöls erfolgen, aber auch erst später. Vorzugsweise erfolgt das Einbringen der weiteren schalenarmen Kornfraktion in den Materialhauptstrom aber vor dem vor dem Zuführen des gespannten Wasserdampfs und dem sich daran anschließenden Expandieren zu den Collets. Die abgetrennte Schalenfraktion kann aufgrund ihrer größeren Dichte als Wasser separiert, weiter aufgereinigt und dann beispielsweise thermisch oder in einer Biogasanlage verwertet werden.

Nach dem Schälen und vor dem Abpressen kann die schalenarme Kornfraktion zu Flocken gewalzt und dazu durch mindestens einen von Flockierwalzen gebildeten Walzenspalt hindurchgeführt werden. Dabei ist die Temperatur der Flocken unter 45 °C zu halten. Die Flocken weisen vorzugsweise eine Flockendicke von 0,1 bis 0,8 mm auf.

Das Abpressen der schalenarmen Kornfraktion erfolgt ohne Zuführen zusätzlicher Wärme. Durch die beim Abpressen geleistete Arbeit kommt es dennoch zu einer Temperaturerhöhung. Diese wird erfindungsgemäß auf eine maximale Kuchentemperatur in dem entstehenden Presskuchen von 70 °C begrenzt. Damit wird ein Trans-Fettsäuregehalt des kaltgepressten Kernöls von 0,2 % sicher eingehalten und oftmals weit unterschritten.

Beim Abpressen kann das kaltgepresste Kernöl in einer ersten Ölfraktion, die während des Abpressens auf nicht mehr als eine erste Grenztemperatur erwärmt wird, und in einer zweiten Ölfraktion, die während des Abpressens auf mehr als die erste Grenztemperatur erwärmt wird, aufgefangen werden. Die erste Ölfraktion weist dann den geringsten thermischen Einfluss auf ihre Ölzusammensetzung auf, und es handelt sich um das hochwertigste bei dem erfindungsgemäßen Verfahren gewonnene Kernöl. Auch die zweite Ölfraktion ist gemäß Codex Alimentarius hochwertiges kaltgepresstes Kernöl. Es kann auch noch eine dritte Ölfraktion aufgefangen werden, die während des Abpressens auf mehr als eine zweite Grenztemperatur erwärmt wird. Die erste Grenztemperatur zwischen der ersten und zweiten Ölfraktion kann zwischen 35 und 50 °C liegen. Vorzugsweise beträgt sie ca. 40 °C. Bei der maximalen Kuchentemperatur von 70 °C weist die erste Ölfraktion dann eine durchschnittliche Temperatur von 32 bis 36 °C und deutlich weniger als 0,1 % Trans-Fettsäuren auf, während die zweite Ölfraktion eine durchschnittliche Temperatur von 40 bis 50 °C und zumindest deutlich weniger als 0,2 % Trans-Fettsäuren aufweist. Die zweite Grenztemperatur zwischen der zweiten und einer etwaigen dritten Ölfraktion kann bei etwa 60 °C liegen.

Bei dem erfindungsgemäßen Abpressen bei Kuchentemperaturen von nicht mehr als 70 °C kann die schalenarme Kornfraktion je nach ölhaltiger Saat auf einen Restölgehalt des Presskuchens von 6 bis 28 Gewichtsprozent seiner Trockenmasse oder von 8 bis weniger als 18 Gewichtsprozent seiner Trockenmasse und vorzugsweise von etwa 10 bis 16 Gewichtsprozent seiner Trockenmasse abgepresst werden. Das kaltgepresste Kernöl kann in üblicher Weise durch Filtration und/oder Sedimentation aufbereitet werden und liefert kaltgepresste native Kernöle in Lebensmittelqualität.

Der durch das Abpressen erhaltene Presskuchen kann zerkleinert oder direkt verwendet werden, und ihm kann eine durch Flotation gewonnenen weitere schalenarme Kornfraktion bzw. das, was davon nach Abpressen übrig ist, zugeschlagen werden, bevor die Collets ausgebildet werden. Der durch das Abpressen erhaltene Presskuchen wird zerkleinert und ihm kann eine durch Flotation gewonnenen weitere schalenarme Kornfraktion bzw. das, was davon nach Abpressen übrig ist, zugeschlagen werden, bevor die Pellets ausgebildet werden

Nicht zurückgeführte Collets können mit einem Lösungsmittel extrahiert werden, um die Collets auf einen Restölgehalt von weniger als 2 Gewichtsprozent oder von 0,3 bis 1,3 Gewichtsprozent ihrer Trockenmasse zu reduzieren. Als Lösungsmittel kann neben Hexan auch jedes andere organische Lösungsmittel verwendet werden, in dem sich Öl gut löst, wie beispielsweise Isopropanol. Auch die Verwendung von azeotropem oder absolutem oder reinem Alkohol in Form von Ethanol ist möglich. Dabei kann es sich insbesondere um Bioalkohol handeln, so dass beim Verarbeiten von ölhaltiger Biosaat Bioproteinprodukte entstehen.

Für Bioprodukte erweist sich die vorstehende Behandlung der Collets in zweifacher Hinsicht als besonders vorteilhaft, da die Colletstruktur eine große stabile innere Oberfläche bildet. Zum einen kann mit nahezu wasserfreiem (absoluten) Bioethanol, wie er großtechnisch als Biotreibstoff hergestellt wird, anstelle von Hexan nachentölt werden, ohne die Proteine stark zu denaturieren, zum anderen entfällt bei Weiterverarbeitung zu einem Proteinkonzentrat die Zwischentrocknung, wie sie beim Einsatz von Hexan ebenfalls notwendig ist. Ein Lösungsmittelaustausch ist nicht erforderlich. Dadurch wird die Extraktion mit Lösungsmittel deutlich vereinfacht.

Damit steht eine lösungsmittelbasierte Ölextraktion zu Verfügung, die die Hexan-Extraktion großtechnisch ersetzen kann und die die Entölung des Proteins aus dem Presskuchen sicherer, weniger giftig und preiswerter macht, als die mit Hexan zu erreichen wäre. Allein die in der Großtechnik nicht zu vermeidenden Emissionen werden erheblich gesenkt, da die Kondensationsfähigkeit von Ethanol deutlich besser ist als diejenige von Hexan. Die Folge ist die Vermeidung von toxischen Umweltbelastungen bei der industriellen Gewinnung pflanzlichen Öls. Bei dieser Ausführungsform des erfindungsgemäßen Verfahrens werden auch Spuren des toxischen Hexans in Endprodukten vermieden. Zudem ist Ethanol als Hilfsmittel für Bioprodukte zugelassen. Damit ist die Herstellung von Proteinen und anderen Begleitprodukten wie saateigenen Fasern und Ballaststoffen in Bioqualitäten möglich.

Für die Extraktionen können ebenso wie für alle bisher beschriebenen Schritte des erfindungsgemäßen Verfahrens industrielle Standardtechnologien eingesetzt werden, insbesondere Karussellextrakteure oder Bandextrakteure. Das eingesetzte Lösungsmittel umschließt in einer Perkolation die Collets, wobei aus dem Lösungsmittel eine Miscella entsteht, in der das in den Collets enthaltene Öl gelöst ist. Diese Miscella wird in bekannter Weise durch Destillationen von dem Lösungsmittel getrennt, so dass das Öl zurückbleibt. Bei diesem handelt es sich um extrahiertes Kernöl.

Die extrahierten Collets können getrocknet und zerkleinert werden, wobei ein hochproteinhaltiges Proteinmehl mit einem Proteingehalt von mehr als 45 Gewichtsprozent, vorzugsweise mehr als 48 Gewichtsprozent Protein in der Trockenmasse entsteht, das wie HP Sojabohnenmehl nahezu schalenfrei ist. Dieses Kernmehl kann mit bekannten Techniken weiter aufbereitet werden.

Eine mögliche Aufbereitung der nach dem Extrahieren mit dem organischen Lösungsmittel getrockneten Collets ist die Alkohol-Wasser-Extraktion zur Entfernung nicht proteinogener Inhaltsstoffe und Anreicherung der Proteine zu einem Proteinkonzentrat.

Die preiswerteste und sicherste Aufarbeitung der im Rahmen des erfindungsgemäßen Verfahrens anfallenden Collets erfolgt dadurch, dass die Alkohol-nassen Collets ohne Trocknung weiterverarbeitet werden. Da Alkohole, in besonderem Maße Ethanol, in jedem Verhältnis mit Wasser mischbar sind, wird die Polarität des Extraktionsmittels erhöht und macht es für eine Entfernung polarer Inhaltsstoff, wie es beispielhaft pflanzeneigene Zucker sind, geeignet. Zusätzlich bleiben die Alkohol-nassen Collets elastisch und führen zu einem verringerten Collet-Abrieb oder Bruch und brauchen daher vor Weiterverarbeitung nicht gesiebt zu werden, wie es nach dem Extrahieren mit dem organischen Lösungsmittel Hexan der Fall ist. Auch der Lösungsmittelaustausch wird so vermeidbar, was die Extraktion weiter vereinfacht.

Auch die Aufbereitung von nach dem Extrahieren mit dem organischen Lösungsmittel Hexan getrockneten Collets erfolgt über die Alkohol-Wasser-Extraktion zur Entfernung nicht proteinogener Inhaltsstoffe und Anreicherung der Proteine zu einem Proteinkonzentrat. Dazu werden die Collets zunächst gesiebt, um Feinteile und Colletbruch, der durch die mechanische Belastung beim Trocknen zwangsläufig entsteht, abzutrennen. Werden diese Feinteile genutzt, um die Friktion der Kaltpressung zu verbessern, wird ein Sieb gewählt, dass Partikel ab 5 mm zurückhält, wird das Material in einer alkoholischen Extraktion weiterbehandelt reicht eine Ausschlussgrenze von 1 mm.

Die um die Feinteile reduzierten Collets werden dann einer Quellung in der Alkohol-Wasser Mischung unterzogen, wofür 15 Minuten ausreichend sind. Die Quellung sollte zerstörungsfrei sein, bevor die mit der Alkohol-Wasser Mischung gesättigten Collets einer erneuten Bandextraktion zugeführt werden, die analog der Extraktion mit dem organischen Lösungsmittel erfolgen kann. Eine geeignete einfache Umsetzung ist es, der Bandextraktion eine Quellschnecke vorzuschalten, um die Quellung kontinuierlich durchzuführen. Es eignen sich aber auch alle anderen technischen Maßnahmen, die eine kontinuierliche Quellung ermöglichen. Auch bei einer direkten Verarbeitung der noch Alkohol-nassen Collets nach deren ersten Extraktion mit absolutem Alkohol anstelle von Hexan ist die Quellung in der Alkohol-Wasser Mischung förderlich.

Die Quellung kann mit der alkoholischen Miscella der alkoholischen Bandextraktion betrieben werden, die dem Ablauf zur Destillation entsprochen hätte. Somit führt die Quellschnecke zu einer weiteren Extraktionsstufe.

Alternativ können die mit dem organischen Lösungsmittel extrahierten Collets direkt, also ohne Trocknen und/oder Zerkleinern weiter aufbereitet werden.

So können, um die Struktur der Collets nicht zu zerstören und damit Feinteile zu erzeugen, die Collets durch einfache Drainage und das Abtropfen des organischen Lösungsmittels vor dem Austrag aus dem Lösungsmittel-Extrakteur entfeuchtet werden. Auf diese Weise können typischerweise mehr als 50 % des Lösungsmittels aus den Collets entfernt werden. Am Ausgang des Lösungsmittel-Extrakteurs werden die Collets von einer Fördereinheit zerstörungsfrei aufgenommen und abtransportiert, beispielsweise von einer Förderschnecke oder einem Förderband. Die Fördereinheit fördert die Lösungsmittel-nassen Collets ohne Scherung zu einem Filter, der in Trennbereiche unterteilt ist. Zerstörungsfrei wird das Material auf den Filter übergeben. Bei dem Filter kann es sich um einen geschlossenen Drehfilter oder Bandfilter handeln, insbesondere einen Vakuumbandfilter. Zwischen der Fördereinheit und dem Filter kann eine Zellenradschleuse installiert sein, um eine Abgrenzung der Lösungsmittelbereiche zu erreichen. Nachdem die Lösungsmittel-nassen Collets auf dem Filter angeordnet wurden, wird der Filter in eine erste Position gebracht, in der der Lösungsmittelgehalt der Lösungsmittel-nassen Collets weiter reduziert wird. Dies kann durch Anlegen eines Vakuums an einen Vakuumbandfilter beschleunigt werden. So kann ein Lösungsmittelanteil von unter 40 Gewichtsprozent erreicht werden. Dabei hat sich das Lösungsmittel aufgrund der Kapillarwirkung zu dem Filter hin konzentriert, so dass über dem Lösungsmittel in den Kapillaren in den Collets eine Lösungsmittel-arme Schicht ausgebildet ist, die nur die Oberfläche der Kapillaren der Collets benetzt. Wenn das organische Lösungsmittel Hexan ist, kann ab einer zweiten Position des Filters reiner Alkohol oder ein Wasser-Alkohol-Azeotrop aufgetragen werden, um das Hexan zu verdrängen. Durch die resultierende Schichtung der Lösungsmittel in den Collets ergibt sich eine nahezu ebene Alkohol/ Hexan-Grenzschicht, so dass nur eine geringe Mischfraktion Hexan/Alkohol/Wasser entsteht. Nach zwei bis drei Waschstufen ist das Hexan in der Struktur der Collets rückstandslos gegen Alkohol ausgetauscht. Dabei ergeben sich nur kleine Volumina einer Hexan/Alkohol-Mischfraktion, die separat durch Destillation aufbereitet werden können. Dieses Beispiel ist exemplarisch. Jede andere technische Vorrichtung, die einen Lösungsmittelaustausch ermöglicht, kann verwendet werden.

An den Lösungsmittelaustausch, die Extraktion mit absolutem Alkohol oder die Trocknung der Hexan-extrahierten Collets kann sich eine Extraktion der Collets mit einer wässrigen Alkohol-lösung anschließen, um ein gereinigtes Proteinkonzentrat zu erhalten. Dabei kann die wässrige Alkohollösung 70 bis 96 Volumenprozent Alkohol aufweisen. Bevorzugt sind 80 bis 90 Volumenprozent Alkohol. Diese Alkoholextraktion insbesondere von Ethanol dient der Entfernung von Toxinen und anderen antinutritiven Inhaltsstoffen. Bei der bevorzugten Alkoholkonzentration bleibt die Quellung der in dem Collets enthaltenen Fasern und die damit einhergehende Volumenzunahme gering. So wird auch verhindert, dass die Perkolationsraten der Collets in Folge der Quellung stark absinken. Eine zu starke Quellung würde die Kapillaren der Collets verschließen.

Vorzugsweise werden die Collets mit der wässrigen Alkohollösung im Gegenstrom extrahiert. Dabei ist ein Verhältnis Feststoff zu Lösungsmittel von 1 zu 2 bis 1 zu 6 sinnvoll. Vorzugsweise werden mindestens 10 Extraktionsstufen im Gegenstrom durchlaufen. Gegen Ende der Extraktion kann eine Verdrängungswäsche mit azeotropem, d. h. 96-prozentigem Alkohol oder absolutem Alkohol erfolgen, um die Trocknung des extrahierten Materials zu erleichtern. Die Extrakte von den Extraktionsstufen werden gesammelt. Nach Abdestillieren des Alkohols verbleibt eine Molasse.

Die azeotrope Wasser-Alkohol-Lösung oder der absolute Alkohol kann separat aufgefangen und zum Austausch von Hexan gegen Alkohol in der Lösungsmittelaustausch-Zone verwendet werden. Vorteil dabei ist, dass die Rückgewinnung des Alkohol-Wasser-Gemisches der Alkohol-Wasser-Extraktion keine Rektifikation benötigt und so kompakt bleiben kann. Die Rektifikation bleibt mit kleinen Volumina dem Lösungsmittelaustausch vorbehalten, der die Hexan-Alkohol-Wasser Mischung trennt.

Eine Alkoholextraktion kann auch unter Herstellung einer Suspension durch Vermahlen in der wässrigen Alkohollösung durchgeführt werden. Die Suspension wird dann über Zentrifugen, Nutschen und/oder Filter im Gegenstrom gereinigt. Dies kann als alleinige wässrige Alkoholextraktion oder als Nachgang zu einer bestehenden Bandextraktion durchgeführt werden. Auch Vakuum-Bandextrakteure eignen sich für die Alkohol-Wäsche der Suspension.

Besonders eignet sich die Suspensionswäsche zur Nachbehandlung nach der vorgesehenen Bandextraktion, da in den Collets viele Verunreinigungen immobilisiert sind, die erst mit Öffnung der Collets frei werden. Damit erfüllt die Suspensionswäsche die Aufgabe einer Feinreinigung, um die Qualität des Proteinkonzentrats und den Proteinanteil zu erhöhen.

Das gereinigte Proteinkonzentrat kann durch Toasten, Flash-Trocknen oder Vakuum-Trocknen getrocknet werden. Das getrocknete Proteinkonzentrat weist einen Proteinanteil von über 60 Gewichtsprozent bezogen auf seine Trockensubstanz auf.

Eine Vorrichtung zur Durchführung des erfindungsgemäßen Verfahrens zur industriellen Gewinnung von kaltgepresstem Kernöl weist einen Walzenspalt bildende Schälwalzen zum Schälen der Körner der jeweiligen ölhaltigen Saat, eine dem Walzenspalt nachgeschaltete Abtrenneinrichtung mit mindestens einem Sieb oder einen Windsichter zum Abtrennen der schalenarmen Kornfraktion von einer schalenreichen Kornfraktion, Flockierwalzen zum Walzen der schalenarmen Kornfraktion zu Flocken, eine Schneckenpresse zum Abpressen des kaltgepressten Kernöls von den Flocken, wobei die Schneckenpresse einen Presskuchen ausgibt, und eine Rückführeinrichtung auf, die dazu ausgebildet ist, einen Teil des Presskuchens zu der Schneckenpresse zurückzuführen. Dabei ist der Schneckenpresse ein Expander zum Zuführen von gespanntem Wasserdampf zu dem Presskuchen und zum anschließenden Expandieren des Presskuchens zu Collets oder ein Pelletierer zum Verpressen des Presskuchens zu Pellets nachgeschaltet, und die Rückführeinrichtung ist dazu ausgebildet, den Teil des Presskuchens nach dem Expander, d. h. in Form eines Teils der Collets, oder nach dem Pelletierer, d. h. in Form eines Teils der Pellets, zurück zu führen.

Dem Expander kann ein Extrakteur nachgeschaltet sein, der dazu ausgebildet ist, die Collets mit einem organischen Lösungsmittel zu extrahieren. Die Rückführeinrichtung kann konkret dazu ausgebildet sein, den zurückgeführten Teil des Presskuchens durch Absieben einer Teilchenfraktion mit einer maximalen Teilchengröße im Bereich von 4 bis 6 mm von den Collets abzutrennen. Dieses Absieben kann vor und/oder nach der Extraktion mit dem organischen Lösungsmittel in dem Extrakteur erfolgen.

Der Pelletierer kann eine Heizeinrichtung umfassen, um den Presskuchen beim Pelletieren vorübergehend auf über 100 °C zu erwärmen.

Die Rückführeinrichtung kann eine Kühlung aufweisen, die dazu ausgebildet ist, den zurückgeführten Teil des Presskuchens abzukühlen. Die Kühlung kann zum Beispiel ein Kühlluftgebläse umfassen, das zu einer Abkühlung des Teils des Presskuchens durch Verdunstungskälte in Folge der Verdunstung enthaltener Feuchtigkeit führt.

Die Schneckenpresse kann eine um eine horizontale Drehachse umlaufende Pressschnecke und einen Siebmantel aufweisen, wobei in einem unterhalb des Siebmantels angeordneten Ölauffangbecken ein quer zu der Drehachse verlaufendes Wehr, das eine zunächst abgepresste erste Ölfraktion und eine später abgepresste zweite Ölfraktion des kaltgepressten Kernöls in dem Ölauffangbecken voneinander trennt, in Richtung der Drehachse verschiebbar ist. Durch das Verschieben des Wehrs kann die oben erläuterte erste Grenztemperatur zwischen der ersten und der zweiten Ölfraktion eingestellt werden. Wenn ein Antrieb vorgesehen ist, der das Wehr abhängig von einem Signal mindestens eines an dem Wehr angeordneten Öltemperatursensors in Richtung der Drehachse verschiebt, kann die erste Grenztemperatur auf einen vorgegebenen Wert geregelt werden, auch wenn die Temperaturverteilung über die Schneckenpresse variiert. Der Siebmantel der Schneckenpresse kann aus Seiherstäben ausgebildet sein.

Weiterhin kann die erfindungsgemäße Vorrichtung ein Flotationsbecken aufweisen, um die schalenreiche Kornfraktion durch Flotation in Wasser in eine weitere schalenarme Kornfraktion und eine Schalenfraktion aufzutrennen. Dabei kann das Flotationsbecken optional einen an oder nahe seinem Grund einmündenden Druckluftanschluss und/oder ein Rührwerk aufweisen.

Ein dem Expander nachgeschaltete Extrakteur kann weiterhin dazu ausgebildet sein, die Collets zu trocknen oder die noch Lösungsmittel-nassen Collets einem Lösungsmittelaustausch zu unterziehen und die Collets dann mit einer wässrigen Alkohollösung zu extrahieren.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einer Schneckenpresse die Rede ist, ist dies so zu verstehen, dass genau eine Schneckenpresse, zwei Schneckenpressen oder mehr Schneckenpressen vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: ist ein Blockdiagramm einer Vorrichtung und zum Ablauf des erfindungsgemäßen Verfahrens und
- **Fig. 2**: zeigt eine bevorzugte Ausführungsform einer Schneckenpresse der Vorrichtung.

### FIGURENBESCHREIBUNG

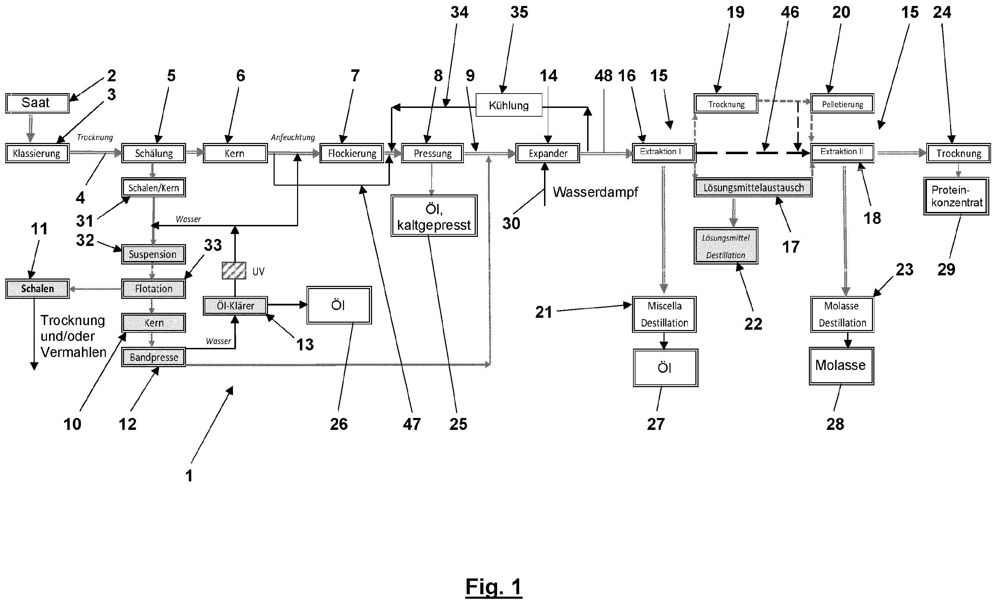

**Fig. 1** zeigt in einem Blockdiagramm eine Vorrichtung 1 und zugleich den Ablauf eines erfindungsgemäßen Verfahrens. Ölhaltige Saat aus einem Silo oder Bunker 2 wird einer Klassierung und Reinigung in einer Siebanlage 3 unterworfen. Von der Siebanlage 3 werden gereinigte Körner 4 innerhalb eines vorgegebenen Korngrößenbereichs erhalten. Nach eventueller Trocknung, um eine Feuchtigkeit der Körner 4 von etwa 5 Gewichtsprozent einzustellen, erfolgt eine Schälung der Körner 4 mit Schälwalzen 5, die einen Walzenspalt bilden und denen eine Abtrenneinrichtung nachgeschaltet ist. Ergebnis sind eine schalenarme Kornfraktion 6 und eine schalenreiche Kornfraktion 31. Die schalenarme Kornfraktion 6 wird mit Flockierwalzen 7 zu Flocken gewalzt oder auf dem Wege einer sofortigen Weiterverarbeitung 47 direkt weiterverarbeitet. Von den Flocken oder der schalenarmen Kornfraktion 6 wird in einer Schneckenpresse 8 kaltgepresstes Kernöl 25 abgepresst. Ein resultierender Presskuchen 9 wird einem Expander 14 zugeführt.

Die schalenreiche Kornfraktion 31 wird hingegen mit Wasser zu einer Suspension 32 versetzt, in der die in einem Kernanteil der schalenreichen Kornfraktion 31 enthaltenen Fasern quellen. Danach tritt eine Flotation 33 auf, bei der eine weitere schalenarme Kornfraktion 10 aufschwimmt und sich so von einer Schalenfraktion 11 trennt. Die Schalenfraktion 11 kann getrocknet und/oder vermahlen werden und beispielsweise in einer Verbrennungs- oder Biogasanlage verwertet werden. Die weitere schalenarme Kornfraktion 10 wird in einer Bandpresse 12 abgepresst. Ihr Feststoffanteil wird dem Presskuchen 9 vor dem Expander 14 zugeschlagen. Von der Bandpresse 12 abgepresstes Wasser wird in einem Ölklärer 13 aufbereitet, in dem Öl 26 abgetrennt wird. Das gereinigte Wasser wird zur Entkeimung UV-behandelt und wiederverwendet. Der Presskuchen 9 und die weitere schalenarme Kornfraktion 10 werden zerkleinert und so dem Expander 14 zugeführt. In dem Expander 14 wird die Temperatur des Presskuchens 9 durch Zuführung von gespanntem Wasserdampf 30 kurzzeitig auf über 100 °C, typischerweise auf bis zu 140 °C erhöht. Beim Austreten aus dem Expander entspannt sich der Wasserdampf und kühlt das in Form von Collets 48 austretende Material auf 80 bis 95 °C ab. Die Collets 48 werden in einem Extrakteur 15 zunächst einer Lösungsmittelextraktion 16 mit beispielsweise Hexan oder reinem oder absolutem Alkohol, vorzugsweise Ethanol, als Extraktion I unterzogen. Bei reinem oder absolutem Alkohol kann eine sofortige Weiterverarbeitung 46 mit direktem Übergang von der Lösungsmittelextraktion 16 in dem Extrakteur 15 zu einer wässrigen Alkoholextraktion 18 als Extraktion II erfolgen. Sonst erfolgt die wässrige Alkoholextraktion 18 nach Lösungsmittelaustausch 17 oder Trocknung 19 der Lösungsmittel-extrahierten Collets. Hieran kann sich eine Pelletierung 20 oder eine weitere Expansion des getrockneten Materials anschließen, oder ein von der Trocknung 19 resultierendes Proteinmehl wird als Produkt ausgegeben.

Die Alkoholextraktion 18 kann auch an von der Trocknung 19 resultierenden Collets oder dem Proteinmehl durchgeführt werden. In einer Destillation 21 wird aus der Miscella der Lösungsmittelextraktion 16 extrahiertes Kernöl 27 gewonnen. In einer Destillation 22 wird Lösungsmittel von dem Lösungsmittelaustausch 17 zurückgewonnen. Aus einer Destillation 23 des alkoholischen Extrakts von der Alkoholextraktion 18 resultiert eine Molasse 28. Eine Trocknung 24 des Rückstands der alkoholischen Extraktion 18 ergibt ein gereinigtes Proteinkonzentrat 29.

Eine Rückführeinrichtung 34 führt einen Teil des Presskuchens 9 nach dem Expandieren am Ausgang des Expanders 14 in die Schneckenpresse 8 zurück. Konkret werden von den aus dem Expander 14 austretenden Collets 48 Feinteile abgesiebt, mit einer Kühlung 35 der Rückführeinrichtung 34 auf eine Temperatur < 35 °C abgekühlt und dann der gewalzten schalenarmen Kornfraktion 6 zugeschlagen, um die Friktion in der Schneckenpresse 8 zu erhöhen. Eine gewisse Friktion der abgepressten schalenarmen Kornfraktion 6 und der Schneckenpresse 8 ist erforderlich, um eine ausreichende Pressleistung in Bezug auf die eingesetztes mechanische Energie, und damit auch in Bezug auf die Erwärmung des in der Schneckenpresse 8 entstehenden Presskuchens 9, sowie den Restölgehalt des Presskuchens 9 zu erreichen. Diese Friktion wird durch die abgekühlten Collets bereitgestellt, ohne dass durch die Rückführung eines Teils des Presskuchens 9 in die Schneckenpresse 8 hygienische Probleme auftreten, weil die Collets 48 durch das Expandieren in dem Expander 14 hygienisiert sind. Zudem weisen die Collets 48 bessere mechanische Eigenschaften zur Erhöhung der Friktion in der Schneckenpresse 8 auf als der Presskuchen 9 vor dem Expander 14.

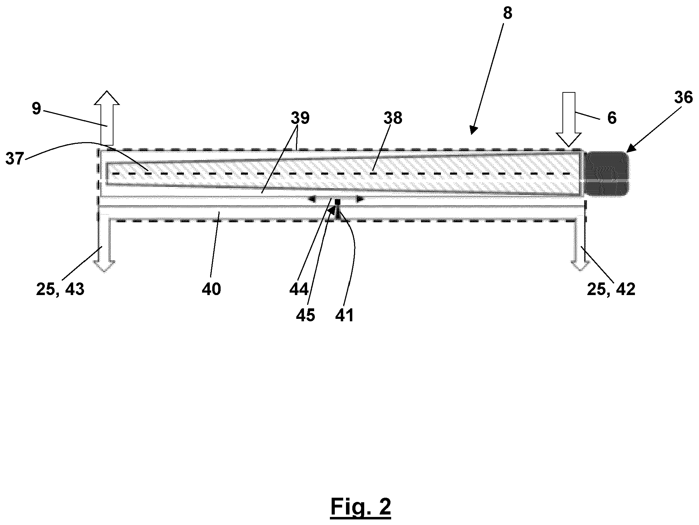

Die in **Fig. 2** dargestellte Ausführungsform der Schneckenpresse 8 der Vorrichtung 1 weist einen elektrischen Antrieb 36 auf, der eine Pressschnecke 37 um eine horizontale Drehachse 38 gegenüber einem Siebmantel 39 verdreht, um das Kernöl 25 von der schalenarmen Fraktion 6 abzupressen, wobei der Presskuchen 9 entsteht. Dabei wird in Richtung der Drehachse 38 zunächst eine erste Ölfraktion 42 abgepresst, in der das Kernöl 25 eine Grenztemperatur nicht überschreitet. Danach wird eine zweite Ölfraktion 43 abgepresst, die immer noch aus kaltgepresstem Kernöl 25 besteht, weil der Schneckenpresse 8 keine Wärme zugeführt wird. Durch das Einwirken der Pressschnecke 37 auf die schalenarme Kornfraktion 6 kommt es aber zu einem Temperaturanstieg in der Schneckenpresse 8 längs der Drehachse 38. Diese wird auf eine maximale Kuchentemperatur des Presskuchens 9 von 70 °C begrenzt. Damit weist auch die zweite Ölfraktion 43 einen Trans-Fettsäuregehalt von weniger als 0,2 % auf. Der Trans-Fettsäuregehalt der ersten Ölfraktion 42 liegt unter 0,1 %. Getrennt werden die beiden Ölfraktionen 42 und 43 in einer unter dem Siebmantel 39 angeordneten Ölauffangwanne 40 durch ein quer zu der Drehachse 38 verlaufendes Wehr 41. Das Wehr 41 wird von einem hier durch einen Doppelpfeil angedeuteten Antrieb 44 längs der Drehachse 38 in Abhängigkeit von einem an dem Wehr 41 angeordneten Öltemperatursensor 45 so verschoben, dass der Öltemperatursensor 45 keine höhere Temperatur als die Grenztemperatur der ersten Ölfraktion 42 erfasst.

### BEISPIELE

### Beispiel 1

Körner einer Rapssaat weisen eine Größe von 1,2 bis 3 mm auf. Die mittlere Größe der zum Abpressen des Kernöls zurückgeführten gebrochenen Collets wird auf 5 mm eingestellt, wobei mindestens 50 Gewichtsprozent der zurückgeführten Collets die Größe von 5 mm aufweisen. Die Körner werden mit den auf Raps eingestellten Schälwalzen 5 geschält. Der Schalenanteil des eingesetzten deutschen 00 Rapses beträgt 14 %. Der Restanteil Schalen, der verfahrenstechnisch bedingt bei den Kernen in der schalenarmen Kornfraktion verbleit beträgt 2,5 %.

Zu 1000 kg der schalenarmen Kornfraktion mit einer Feuchtigkeit von 5 Gewichtsprozent werden 75 kg gebrochene Collets der mittleren Größe von 5 mm als Presshilfe zugesetzt und intensiv durchmischt. Diese Mischung wird der Schneckenpresse 8 zugeführt. Die Einfülltemperatur beträgt 24 °C. Der Presskuchen 9 tritt mit einer Temperatur von 65 °C aus, der Restölgehalt im Presskuchen 9 beträgt 12 %.

Das austretende kaltgepresste Rapskernöl wird in dem Ölauffangbecken 40 mittels des Wehrs 41 in zwei bei 40 °C getrennten Ölfraktionen 42 und 43 aufgefangen.

Die erste Ölfraktion 42 ist natives kaltgepresstes virgin Kernöl und weist einen Gehalt von Trans-Fettsäuren unter 0,1 % auf. Der Anteil an virgin Kernöl liegt bei 40 % des gesamten kaltgepressten Kernöls. Die zweite Ölfraktion 43 mit Temperaturen zwischen 41 und 58 °C ist natives kaltgepresstes Kernöl und weist einen Gehalt von Trans-Fettsäuren unter 0,15 % auf und macht ca. 60 % des aufgefangenen Kernöls aus. Beide Ölfraktionen 42 und 43 ergeben zusammen ca. 0,38 Tonnen kaltgepresstes Kernöl, Der aus der Schneckenpresse 8 austretende Presskuchen 9 weist einen Restölgehalt von 12 Gewichtsprozent auf. Die Austrittstemperatur des Presskuchens 9 aus der Schneckenpresse 8 beträgt 65 °C.

740 kg Presskuchen werden zerkleinert und im Expander 14 unter Zugabe von gespanntem Wasserdampf so erwärmt, dass nach dem Austritt aus dem Expander 14 eine Temperatur von 83 °C in den Collets erreicht wird. Die Collets werden abgekühlt. Die abgekühlten Collets werden über einen Walzenbrecher in Teilchen kleiner 5 mm gebrochen. 120 kg der gebrochen Collets werden mit der schalenarmen Kornfraktion vermischt, die verbleibenden 620 kg (steady state) der gebrochen Collets werden zu einem Proteinmehl vermahlen. Der Proteingehalt des Proteinmehls liegt bei 37 %. Der NSI Wert des Proteinmehls liegt über dem Wert des in Raps gemessen nativen Rohproteins.

Der zurückgeführte Teilstrom der Collets kann vor dem Brechen bis auf ca. 30°C gekühlt werden.

### Beispiel 1a

Abweichend von dem voranstehenden Beispiel 1 werden die verbleibenden 620 kg (steady state) der Collets nicht zu einem Proteinmehl vermahlen, sondern einem Bandextraktor zugeführt und in der Extraktion I mit Hexan im Gegenstrom perkoliert. Die Miscella wird destilliert und ergibt ca. 160 kg Öl. Die Hexan-nassen entölten Collets werden abgetropft und über einen Toaster unter Erhalt der Colletstruktur schonend getrocknet. Ca. 12 kg Feinteile werden von den Collets abgesiebt. Die verbleibenden Collets werden einem zweiten Bandextraktor über eine als Quellschnecke dienende Rohrschnecke zugeführt. In der Rohrschnecke quellen die Collets im ablaufenden Extrakt des zweiten Bandextraktors in wässrigem Alkohol. Anschließend werden die vorgequollenen Collets auf dem zweiten Bandextraktor mit einem Alkohol-Wasser Gemisch von 80 zu 20 Gewichtsprozent in der Extraktion II entzuckert. Eine weitere letzte Extraktionsstufe wird mit einem azeotropen Ethanol ausgeführt. Der Alkohol wird zurückgewonnen. Die Collets werden einem Vakuum-Schaufeltrockener zugeführt und bei 50 mbar und 45 °C 1 Stunde lang getrocknet. Im Anschluss werden die getrockneten Collets vermahlen. Es entstehen ca. 300 kg Rapsproteinkonzentrat mit einem NSI von 75 % und einem Proteingehalt von ca. 64 % bezogen auf die Trockensubstanz.

### Beispiel 2

Sojabohnen weisen eine Größe von 6-11 mm auf. Die maximale Größe der zum Abpressen des Kernöls zurückgeführten gebrochenen Collets wird auf 15 mm eingestellt. Die Sojabohnen werden mit den auf Soja eingestellten Schälwalzen 5 geschält. Der Schalenanteil der eingesetzten Sojabohnen beträgt 8 %. Der Restanteil der Schalen, der verfahrenstechnisch bedingt bei den Kernen in der schalenarmen Kornfraktion verbleit beträgt 1,5 %.

1 Tonne geschälte Sojabohnen werden mit den Flockierwalzen 7 zu Flocken gewalzt. Die schalenarme Kornfraktion wird nur so stark gewalzt, dass eine Temperatur der Flocken unter 45 °C gehalten wird. Um diese Temperatur einzuhalten, können die Flockierwalzen 7 gekühlt werden. Die Flocken werden vor dem Kaltpressen mit den Collets der mittleren Größe von 15 mm versetzt und intensiv durchmischt. Dann wird diese Mischung der Schneckenpresse 8 zugeführt.

In der Schneckenpresse wird die schalenarme Kornfraktion mit den zugesetzten Collets komprimiert. Das austretende kaltgepresste Kernöl wird nach Temperaturbereichen getrennt aufgefangen. Die erste Ölfraktion 42 mit einer Temperatur von unter 42 °C ist virgin Soja-Kernöl. Die zweite Ölfraktion 43 zwischen 43 und 60 °C ist natives kaltgepresstes Soja-Kernöl. Es zeigt sich, dass die Collets dazu führen, dass der Anteil des Virgin Soja-Kernöls ca. 30 % des aufgefangenen kaltgepressten Soja-Kernöls entspricht. Beide Ölfraktionen 42 und 43 ergeben zusammen ca. 0,8 Tonnen kaltgepresstes Soja-Kernöl. Der aus der Schneckenpresse 8 austretende Presskuchen 9 weist einen Restölgehalt von 10 Gewichtsprozent auf, der Proteingehalt liegt bei 47 %. Die Austrittstemperatur des Presskuchens 9 aus der Schneckenpresse 8 beträgt 68 °C.

Der Presskuchen 9 wird zerkleinert, und im Expander 14 unter Zugabe von gespanntem Wasserdampf so erwärmt, dass nach dem Austritt aus dem Expander 14 eine Temperatur von 85 °C in den Collets erreicht wird. Die Collets werden abgekühlt. Die abgekühlten Collets werden über einen Walzenbrecher in Teilchen kleiner 15 mm gebrochen. Ein Teil der gebrochen Collets wird mit den Flocken vermischt; der andere Teil der gebrochen Collets wird zu einem Proteinmehl weiterverarbeitet. Der Proteingehalt liegt bei 47 %. Der NSI Wert des Proteinmehls weist den Wert des nativen Rohproteins auf.

### Beispiel 2b

Abweichend bzw. ergänzend zu dem Beispiel 2 wird der zerkleinert Presskuchen 9 in dem Expander 14 unter Zugabe von gespanntem Wasserdampf so erwärmt, dass nach dem Austritt aus dem Expander 14 eine Temperatur zwischen 85 °C und 90 °C in den Collets erreicht wird. Für die Rückführung wird ein Teilstrom der abgekühlten Collets über den Walzenbrecher in Teilchen kleiner 10 mm gebrochen. Der zurückgeführte Teil der gebrochen Collets wird mit den Flocken vermischt. Nicht-gebrochene Collets werden in der Extraktion I weiterverarbeitet. Der Proteingehalt der Collets liegt bei 46 %, der NSI Wert bei 85 %.

In der Extraktion I werden die Collets wie im Beispiel 1 auf einem Bandextraktor mit Hexan extrahiert, getrocknet, über die Extraktion II mit wässrigem Alkohol von 75 % entzuckert, in einem Vakuumtrockner getrocknet und anschließend vermahlen. Der Proteingehalt liegt bei 71 % der Trockensubstanz, der NSI beträgt 75 %. Es werden ca. 300 kg Sojaproteinkonzentrat erhalten.

### Beispiel 3

Geschälte Sojabohnen werden direkt der der Schneckenpresse 8 zugeführt, abgepresst und zu den in Beispiel 2 angeführten Collets verarbeitet. Ein Teilstrom der Collets, der seiner Menge nach den bei der Schälung entfernten Menge Schalen entspricht, wird auf 10 mm gebrochen und den geschälten Sojabohnen vor der Schneckenpresse 8 zugesetzt. Die restlichen Collets werden in der Extraktion I auf einem ersten Bandextraktor mit absolutem Ethanol bei 60 °C mehrstufig im Gegenstrom unter Perkolation extrahiert. Die entstehende Miscella wird destilliert, wobei Ethanol von mindestens 90 %, vorzugsweise azeotropes Ethanol gewonnen wird. Das Ethanol wird durch Molokularsiebe entwässert (absolutiert) und dem Prozess erneut zugeführt. Die Extraktionszeit liegt zwischen 1 und 3 Stunden, vorzugsweise bei ca. 2 Stunden. Dabei wird ein Ethanol zu Collet-Verhältnis von 2,5:1 bis 3:1 eingestellt. Nach erschöpfender Extraktion wird zunächst das Ethanol aus den Collets abgetropft. Eine Trocknung der Collets zur Entfernung des verbleibenden Ethanols ist nicht notwendig. Die Extraktion II auf einem zweiten Bandextraktor mit vorgeschalteter Quellschnecke setzt wasserhaltiges Ethanol im Gegenstrom ein. Die Extraktionstemperatur bleibt bei 60 °C. Das wässrige Ethanol zu Collet-Verhältnis liegt bei 4:1 bis 5:1. Die Extraktionszeit beträgt maximal 2 Stunden. Die alkoholnassen Collets werden direkt nach Austrag aus dem zweiten Bandextrator einer Suspensionswäsche zur Feinreinigung unterworfen. Hierzu werden die Collets über ein Rotor-Stator System auf ca. 50-150 µm in wässrigem Alkohol vermahlen, über Pressfilter gefiltert, mit absolutem Ethanol nachgewaschen und durch Verdichtung des Filterkuchens m Alkoholgehalt reduziert. Der Filterkuchen wird in dem Vakuum-Schaufeltrockner bei 50 mbar und 55 °C getrocknet. Es entsteht ein Soja-Proteinkonzentrat von 295 kg, einem Proteingehalt von 74 % bezogen auf Trockensubstanz und einem NSI von 80 %.

### BEZUGSZEICHENLISTE

- 1: Vorrichtung
- 2: Bunker
- 3: Siebanlage
- 4: Körner
- 5: Schälwalzen
- 6: Schalenarme Kornfraktion
- 7: Flockierwalzen
- 8: Schneckenpresse
- 9: Presskuchen
- 10: Weitere schalenarme Kornfraktion
- 11: Schalenfraktion
- 12: Bandpresse
- 13: Ölklärer
- 14: Expander
- 15: Extrakteur
- 16: Lösungsmittelextraktion
- 17: Lösungsmittelaustausch
- 18: Alkoholextraktion
- 19: Trocknung
- 20: Pelletierung
- 21: Destillation
- 22: Destillation
- 23: Destillation
- 24: Trocknung
- 25: Kaltgepresstes Kernöl
- 26: Öl
- 27: Extrahiertes Kernöl
- 28: Molasse
- 29: Gereinigtes Proteinkonzentrat
- 30: Wasserdampf
- 31: Schalenreiche Kornfraktion
- 32: Suspension
- 33: Flotation
- 34: Rückführeinrichtung
- 35: Kühlung
- 36: Antrieb
- 37: Pressschnecke
- 38: Drehachse
- 39: Siebmantel
- 40: Ölauffangbecken
- 41: Wehr
- 42: erste Ölfraktion
- 43: zweite Ölfraktion
- 44: Antrieb
- 45: Öltemperatursensor
- 46: Sofortige Weiterverarbeitung
- 47: Sofortige Weiterverarbeitung
- 48: Collets

## Patentansprüche

1. Verfahren zur industriellen Gewinnung von kaltgepresstem Kernöl (25) mit den Schritten:
- Schälen von Körnern (4) einer ölhaltigen Saat und Abtrennen von Schalen von einer schalenarmen Kornfraktion (6), und
- Abpressen des kaltgepressten Kernöls (25) von der schalenarmen Kornfraktion (6),
- wobei eine Kuchentemperatur in einem entstehenden Presskuchen (9) auf 70 °C begrenzt wird und
- wobei eine Teilmenge des Presskuchens (9) zurückgeführt, mit der schalenarmen Kornfraktion (6) vor dem Abpressen vermengt und erneut abgepresst wird,
**dadurch gekennzeichnet,**
- **dass** die Teilmenge des Presskuchens vor dem Zurückführen nach Zuführen von gespanntem Wasserdampf zu Collets (48) expandiert wird,
- wobei die Teilmenge des Presskuchens (9) vor dem Zurückführen vorübergehend auf über 100 °C erwärmt und vor dem erneuten Abpressen wieder auf eine Temperatur unter 60 °C abgekühlt wird und
- wobei dann, wenn die ölhaltige Saat Rapssaat ist,
- die schalenarme Kornfraktion (6)
- mehr als 4 Gewichtsprozent Schalen und/oder
- einen Wassergehalt
- von weniger als 4 Gewichtsprozent oder
- von mehr als 7 Gewichtsprozent
aufweist und/oder
- ein Restölgehalt des Presskuchens (9) auf weniger als 18 Gewichtsprozent einer Trockenmasse des Presskuchens (9) reduziert wird.

2. Verfahren nach Anspruch 1, **dadurch gekennzeichnet, dass** in der zurückgeführten Teilmenge des Presskuchens (9) eine massengewichtete mittlere Größe der Collets (48) mindestens 100 % und maximal 400 % einer mittleren Teilchengröße der schalenarmen Kornfraktion und/oder einer mittleren Korngröße der Körner (4) der ölhaltigen Saat beträgt, wobei dann, wenn die mittlere Teilchengröße der schalenarmen Kornfraktion und/oder die mittlere Korngröße der Körner (4) der ölhaltigen Saat größer als 5 mm ist, die massengewichtete mittlere Größe der Collets (48) in der zurückgeführten Teilmenge des Presskuchens maximal 300 % der mittleren Teilchengröße der schalenarmen Kornfraktion und/oder der mittleren Korngröße der Körner (4) der ölhaltigen Saat beträgt.

3. Verfahren nach einem der vorhergehenden Ansprüche, **dadurch gekennzeichnet, dass** der gespannte Wasserdampf so dosiert wird, dass der Presskuchen (9) unter Einwirkung des Wasserdampfs (30) vorübergehend auf über 100 °C erwärmt wird und die Collets (48) nach dem Expandieren eine Temperatur von 80 °C bis 95 °C aufweisen.

4. Verfahren nach einem der vorhergehenden Ansprüche, **dadurch gekennzeichnet, dass** der gesamte Presskuchen zu Collets (48) expandiert wird und dass die Collets (48) mit einem Lösungsmittel extrahiert werden, wobei die zurückgeführte Teilmenge des Presskuchens (9), vor und/oder nach dem Extrahieren von den Collets (48) genommen wird.

5. Verfahren nach Anspruch 4, **dadurch gekennzeichnet, dass** die Collets (48) mit reinem Alkohol, bevorzugt Ethanol, extrahiert werden und ohne vorheriges Trocknen einer Quellung in einer Alkohol-Wasser-Mischung und einer anschließenden weiteren Extraktion mit der Alkohol-Wasser-Mischung unterzogen werden.

6. Verfahren nach einem der vorhergehenden Ansprüche, **dadurch gekennzeichnet, dass** der Presskuchen (9) vor dem Zuführen des gespannten Wasserdampfs (30) zerkleinert wird.

7. Verfahren zur industriellen Gewinnung von kaltgepresstem Kernöl (25) mit den Schritten:
- Schälen von Körnern (4) einer ölhaltigen Saat und Abtrennen von Schalen von einer schalenarmen Kornfraktion (6), und
- Abpressen des kaltgepressten Kernöls (25) von der schalenarmen Kornfraktion (6),
- wobei eine Kuchentemperatur in einem entstehenden Presskuchen (9) auf 70 °C begrenzt wird und
- wobei eine Teilmenge des Presskuchens (9) zurückgeführt, mit der schalenarmen Kornfraktion (6) vor dem Abpressen vermengt und erneut abgepresst wird,
**dadurch gekennzeichnet,**
- **dass** die Teilmenge des Presskuchens vor dem Zurückführen zu beim erneuten Abpressen formstabilen Pellets verpresst wird,
- wobei der Presskuchen (9) vor dem Verpressen zerkleinert wird und
- wobei die Teilmenge des Presskuchens (9) vor dem Zurückführen vorübergehend auf über 100 °C erwärmt und vor dem erneuten Abpressen wieder auf eine Temperatur unter 60 °C abgekühlt wird.

8. Verfahren nach Anspruch 7, **dadurch gekennzeichnet, dass** in der zurückgeführten Teilmenge des Presskuchens (9) eine massengewichtete mittlere Größe der Pellets mindestens 50 % und maximal 300 % einer mittleren Teilchengröße der schalenarmen Kornfraktion und/oder einer mittleren Korngröße der Körner (4) der ölhaltigen Saat beträgt, wobei dann, wenn die mittlere Teilchengröße der schalenarmen Kornfraktion und/oder die mittlere Korngröße der Körner (4) der ölhaltigen Saat größer als 5 mm ist, die massengewichtete mittlere Größe der Pellets in der zurückgeführten Teilmenge des Presskuchens maximal 200 % der mittleren Teilchengröße der schalenarmen Kornfraktion und/oder der mittleren Korngröße der Körner (4) der ölhaltigen Saat beträgt.

9. Verfahren nach einem der vorhergehenden Ansprüche, **dadurch gekennzeichnet, dass** die zurückgeführte Teilmenge des Presskuchens (9) vor dem erneuten Abpressen auf eine Temperatur unter 60 °C bevorzugt auf eine Temperatur im Bereich von 20 bis 35 °C oder von 25 bis 30 °C abgekühlt wird.

10. Verfahren nach einem der vorhergehenden Ansprüche, **dadurch gekennzeichnet, dass** die zurückgeführte Teilmenge des Presskuchens (9) 5 bis 30 Gewichtsprozent des Presskuchens (9) ausmacht.

11. Verfahren nach einem der vorhergehenden Ansprüche, **dadurch gekennzeichnet, dass** beim Abpressen ein Restölgehalt auf 8 bis 22 Gewichtsprozent einer Trockenmasse des Presskuchens eingestellt wird.

12. Verfahren nach einem der vorhergehenden Ansprüche, **dadurch gekennzeichnet, dass** die schalenarme Kornfraktion (6) ohne Wärmezufuhr oder unter Wärmeabfuhr abgepresst wird.

13. Verfahren nach einem der vorhergehenden Ansprüche, **dadurch gekennzeichnet, dass** das kaltgepresste Kernöl (25) in einer ersten Ölfraktion, die während des Abpressens auf nicht mehr als eine Grenztemperatur erwärmt wird, und in einer zweiten Ölfraktion, die während des Abpressens auf mehr als die Grenztemperatur erwärmt wird, aufgefangen wird, wobei die Grenztemperatur zwischen 40 und 50 °C liegt.

14. Verfahren nach Anspruch 13, **dadurch gekennzeichnet, dass** die schalenarme Fraktion mit einer Schneckenpresse (8) mit um eine horizontale Drehachse (38) umlaufenden Pressschnecke (37) und einem Siebmantel (39) um die Pressschnecke (37) abgepresst wird, wobei in einem unterhalb des Siebmantels (39) angeordneten Ölauffangbecken (40) ein quer zu der Drehachse (38) verlaufendes Wehr (41) fortlaufend so längs der Drehachse (38) verschoben wird, dass es die erste Ölfraktion (42) und die zweite Ölfraktion (43) des kaltgepressten Kernöls (25) in dem Ölauffangbecken (40) voneinander trennt.

15. Verfahren nach Anspruch 14, **dadurch gekennzeichnet, dass** das Wehr abhängig von einem Signal mindestens eines an dem Wehr angeordneten Öltemperatursensors (45) in längs der Drehachse (38) verschoben wird.

## Claims

1. Method of obtaining cold-pressed kernel oil (25) at an industrial scale, comprising the steps of:
- hulling grains (4) of an oil-containing seed and separating hulls from a low-hull grain fraction (6), and
- pressing the cold-pressed kernel oil (25) from the low-hull grain fraction (6),
- wherein a cake temperature in a press cake (9) being generated is limited to 70 °C, and
- wherein a part of the press cake (9) is returned, mixed with the low-hull grain fraction (6) prior to the pressing and pressed once again,
**characterized in**
- **that** the part of the press cake, prior to being returned, is expanded to form collets (48) after supplying pressurized steam,
- wherein the part of the press cake (9), prior to being returned, is temporarily heated up to above 100 °C, and, prior to being pressed once again, cooled down to a temperature below 60 °C, and
- wherein, if the oil-containing seed is rape seed,
- the low-hull grain fraction (6) comprises
- more than 4 % by weight hulls and/or
- a water content
- of less than 4 % by weight or
- of more than 7 % by weight,
and/or
- a residual oil content of the press cake (9) is reduced to less than 18 % by weight of a dry matter of the press cake (9).

2. Method of claim 1, **characterized in that** a weight-averaged average size of the collets (48) in the returned part of the press cake (9) is at least 100 % and at maximum 400 % of at least one of an average particle size of the low-hull grain fraction and an average particle size of the grains (4) of the oil-containing seed, wherein, if at least one of the average particle size of the low-hull grain fraction and the average grain size of the grains (4) of the oil-containing seed is more than 5 mm, then the weight-averaged average size of the collets in the returned part of the press cake is at maximum 300 % of at least one of the average particle size of the low-hull grain fraction and an average grain size of the grains (4) of the oil-containing seed.

3. Method of any of the preceding claims, **characterized in that** the pressurized steam is metered such that the press cake (9), under the influence of the steam (30), is temporarily heated up to above 100°C, and that the collets (48), after the expanding, have a temperature from 80°C to 95°C.

4. Method of any of the preceding claims, **characterized in that** the entire press cake is expanded to form collets (48), and that the collets (48) are extracted with a solvent, wherein the returned part of the press cake (9) is taken from the collets (48) prior to and/or after the extracting.

5. Method of claim 4, **characterized in that** the collets (48) are extracted with pure alcohol, preferably ethanol, and, without previous drying, subjected to swelling in an alcohol-water mixture and a subsequent further extraction with the alcohol-water mixture.

6. Method of any of the preceding claims, **characterized in that** the press cake (9) is comminuted prior to supplying the pressurized steam (30).

7. Method of obtaining cold-pressed kernel oil (25) at an industrial scale, comprising the steps of:
- hulling grains (4) of an oil-containing seed and separating hulls from a low-hull grain fraction (6), and
- pressing the cold-pressed kernel oil (25) from the low-hull grain fraction (6),
- wherein a cake temperature in a press cake (9) being generated is limited to 70 °C, and
- wherein a part of the press cake (9) is returned, mixed with the low-hull grain fraction (6) prior to the pressing and pressed once again,
**characterized in**
- **that** the part of the press cake, prior to being returned, is compressed to form pellets which are dimensionally stable when being pressed once again,
- wherein the part of the press cake (9) is comminuted prior to the compressing, and
- wherein the part of the press cake (9), prior to being returned, is temporarily heated up to above 100 °C, and, prior to being pressed again, cooled down to a temperature below 60 °C.

8. Method of claim 7, **characterized in that** a weight-averaged average size of the pellets in the returned part of the press cake (9) is at least 50 % and at maximum 300 % of at least one of an average particle size of the low-hull grain fraction and an average particle size of the grains (4) of the oil-containing seed, wherein, if at least one of the average particle size of the low-hull grain fraction and the average grain size of the grains (4) of the oil-containing seed is more than 5 mm, then the weight-averaged average size of the pellets in the returned part of the press cake is at maximum 200 % of at least one of the average particle size of the low-hull grain fraction and an average grain size of the grains (4) of the oil-containing seed.

9. Method of any of the preceding claims, **characterized in that** the returned part of the press cake (9), prior to being pressed once again, is cooled down to a temperature below 60°C, preferably to a temperature in a range from 20 to 35°C or from 25°C to 30°C.

10. Method of any of the preceding claims, **characterized in that** the returned part of the press cake (9) makes up 5 to 30 percent by weight of the press cake (9).

11. Method of any of the preceding claims, **characterized in that**, in the pressing, a residual oil content of 8 to 22 percent by weight of the press cake is adjusted.

12. Method of any of the preceding claims, **characterized in that** the low-hull grain fraction (6) is pressed without addition of heat or while removing heat.

13. Method of any of the preceding claims, **characterized in that** the cold-pressed rape kernel oil (25) is collected in a first oil fraction, that is not heated up beyond a first limit temperature during pressing, and in a second oil fraction, that is heated up to more than the limit temperature during pressing, wherein the limit temperature is between 40 and 50 °C.

14. Method of claim 13, **characterized in that** the low-hull fraction is pressed by means of a screw press (8) having a press screw (37) rotating about a horizontal rotation axis (38) and a sieve box (39) extending around the press screw (37), wherein, in an oil collection basin (40) arranged beneath the sieve box (39), a weir (41) running crosswise with regard to the rotation axis (38) is continuously shifted in direction of the rotation axis (38) such that it separates the first oil fraction (42) and the second oil fraction (43) of the cold-pressed rape kernel oil (25) in the oil collection basin (40) from one another.

15. Method of claim 14, **characterized in that** the weir is shifted in direction of the rotation axis (38) depending on a signal of at least one oil temperature sensor (45) arranged at the weir.

## Revendications

1. Procédé pour l'extraction industrielle d'huile de noyau pressée à froid (25) comprenant les étapes suivantes :
- décorticage de grains (4) d'une graine oléagineuse et séparation des enveloppes d'une fraction de grains pauvre en enveloppes (6), et
- pressage de l'huile de noyau pressée à froid (25) à partir de la fraction de grains pauvre en enveloppes (6),
- dans lequel une température du tourteau dans un tourteau (9) formé est limitée à 70 °C et
- dans lequel un sous-ensemble du tourteau (9) est recyclé, mélangé à la fraction de grains pauvre en enveloppes (6) avant le pressage et re-pressé,
**caractérisé en ce que**
- le sous-ensemble du tourteau est, avant le recyclage, après l'apport de vapeur d'eau sous pression, soumis à une expansion en collets (48),
- le sous-ensemble du tourteau (9) est, avant le recyclage, temporairement chauffé à plus de 100 °C et, avant le re-pressage, refroidi à une température inférieure à 60 °C, et
- lorsque la graine oléagineuse est une graine de colza,
- la fraction de grains pauvre en enveloppes (6)
- présente plus de 4 pour cent en poids d'enveloppes et/ou
- une teneur en eau
- inférieure à 4 pour cent en poids ou
- supérieure à 7 pour cent en poids
et/ou
- une teneur résiduelle en huile du tourteau (9) est réduite à moins de 18 pour cent - en poids d'une matière sèche du tourteau (9).

2. Procédé selon la revendication 1, **caractérisé en ce que**, dans le sous-ensemble recyclé du tourteau (9), une taille moyenne pondérée en masse des collets (48) est d'au moins 100 % et au maximum 400 % d'une taille moyenne des particules de la fraction de grains pauvre en enveloppes et/ou d'une taille moyenne des grains (4) de la graine oléagineuse, et lorsque la taille moyenne des particules de la fraction de grains pauvre en enveloppes et/ou la taille moyenne des grains (4) de la graine oléagineuse est supérieure à 5 mm, la taille moyenne pondérée en masse des collets (48) dans le sous-ensemble recyclé du tourteau est au maximum 300 % de la taille moyenne des particules de la fraction de grains pauvre en enveloppes et/ou de la taille moyenne des grains (4) de la graine oléagineuse.

3. Procédé selon l'une des revendications précédentes, **caractérisé en ce que** la vapeur d'eau sous pression est dosée de telle sorte que le tourteau (9) est temporairement chauffé à plus de 100 °C sous l'effet de la vapeur d'eau (30) et que les collets (48) présentent, après l'expansion, une température de 80 °C à 95 °C.

4. Procédé selon l'une des revendications précédentes, **caractérisé en ce que** l'ensemble du tourteau est soumis à une expansion en collets (48) et que les collets (48) sont extraits avec un solvant, le sous-ensemble recyclé du tourteau (9) étant prélevé avant et/ou après l'extraction des collets (48).

5. Procédé selon la revendication 4, **caractérisé en ce que** les collets (48) sont extraits avec de l'alcool pur, de préférence de l'éthanol, et sont soumis, sans séchage préalable, à un gonflement dans un mélange alcool-eau et à une extraction supplémentaire avec le mélange alcool-eau.

6. Procédé selon l'une des revendications précédentes, **caractérisé en ce que** le tourteau (9) est broyé avant l'apport de vapeur d'eau sous pression (30).

7. Procédé pour l'extraction industrielle d'huile de noyau pressée à froid (25) comprenant les étapes suivantes :
- décorticage de grains (4) d'une graine oléagineuse et séparation des enveloppes d'une fraction de grains pauvre en enveloppes (6), et
- pressage de l'huile de noyau pressée à froid (25) à partir de la fraction de grains pauvre en enveloppes (6),
- dans lequel une température du tourteau dans un tourteau (9) formé est limitée à 70 °C et
- dans lequel un sous-ensemble du tourteau (9) est recyclé, mélangé à la fraction de grains pauvre en enveloppes (6) avant le pressage et re-pressé,
**caractérisé en ce que**
- le sous-ensemble du tourteau est, avant le recyclage, comprimé en pellets stables en forme lors du re-pressage,
- le tourteau (9) est broyé avant la compression, et
- le sous-ensemble du tourteau (9) est, avant le recyclage, temporairement chauffé à plus de 100 °C et, avant le re-pressage, refroidi à une température inférieure à 60 °C.

8. Procédé selon la revendication 7, **caractérisé en ce que**, dans le sous-ensemble recyclé du tourteau (9), une taille moyenne pondérée en masse des pellets est d'au moins 50 % et au maximum 300 % d'une taille moyenne des particules de la fraction de grains pauvre en enveloppes et/ou d'une taille moyenne des grains (4) de la graine oléagineuse, et lorsque la taille moyenne des particules de la fraction de grains pauvre en enveloppes et/ou la taille moyenne des grains (4) de la graine oléagineuse est supérieure à 5 mm, la taille moyenne pondérée en masse des pellets dans le sous-ensemble recyclé du tourteau est au maximum 200 % de la taille moyenne des particules de la fraction de grains pauvre en enveloppes et/ou de la taille moyenne des grains (4) de la graine oléagineuse.

9. Procédé selon l'une des revendications précédentes, **caractérisé en ce que** le sous-ensemble recyclé du tourteau (9) est refroidi, avant le re-pressage, à une température inférieure à 60 °C, de préférence à une température comprise entre 20 et 35 °C ou entre 25 et 30 °C.

10. Procédé selon l'une des revendications précédentes, **caractérisé en ce que** le sous-ensemble recyclé du tourteau (9) représente 5 à 30 pour cent en poids du tourteau (9).

11. Procédé selon l'une des revendications précédentes, **caractérisé en ce qu'**un reste de teneur résiduelle en huile est réglé à 8 à 22 pour cent en poids d'une matière sèche du tourteau lors du pressage.

12. Procédé selon l'une des revendications précédentes, **caractérisé en ce que** la fraction de grains pauvre en enveloppes (6) est pressée sans apport de chaleur ou sous évacuation de chaleur.

13. Procédé selon l'une des revendications précédentes, **caractérisé en ce que** l'huile de noyau pressée à froid (25) est recueillie dans une première fraction d'huile, qui est chauffée à pas plus qu'une température limite pendant le pressage, et dans une seconde fraction d'huile, qui est chauffée à plus que la température limite pendant le pressage, la température limite étant comprise entre 40 et 50 °C.

14. Procédé selon la revendication 13, **caractérisé en ce que** la fraction pauvre en enveloppes est pressée avec une presse à vis (8) comprenant une vis de pressage rotative (37) autour d'un axe de rotation horizontal (38) et un manteau filtrant (39) autour de la vis de pressage (37), un bassin collecteur d'huile (40) étant disposé sous le manteau filtrant (39), dans lequel un déversoir (41) s'étendant transversalement à l'axe de rotation (38) est déplacé en continu le long de l'axe de rotation (38) de sorte qu'il sépare la première fraction d'huile (42) et la seconde fraction d'huile (43) de l'huile de noyau pressée à froid (25) dans le bassin collecteur d'huile (40).

15. Procédé selon la revendication 14, **caractérisé en ce que** le déversoir est déplacé le long de l'axe de rotation (38) en fonction d'un signal d'au moins un capteur de température d'huile (45) disposé sur le déversoir.
